# EUROPEAN PATENT SPECIFICATION

(11) **EP 4 263 777 B1**
(45) Date of publication and mention of the grant of the patent: **22.04.2026**
(21) Application number: 21823325.2
(22) Date of filing: 08.12.2021
(51) Int. Cl.: C11D 3/37, C08L 79/02

(54) **BIODEGRADABLE POLYMERS**
BIOLOGISCH ABBAUBARE POLYAMINE UND ALKOXYLIERTE POLYAMINE
POLYAMINES BIODÉGRADABLES ET POLYAMINES ALCOXYLÉS

(30) Priority: 15.12.2020 EP 20214253; 23.04.2021 EP 21170207
(43) Date of publication of application: 25.10.2023
(73) Proprietor: BASF SE, 67056 Ludwigshafen am Rhein (DE)
(72) Inventor: DE, Swati, 67056 Ludwigshafen (DE); WITTELER, Helmut, 67056 Ludwigshafen (DE); ESPER, Claudia, 67056 Ludwigshafen (DE); HUEFFER, Stephan, 67056 Ludwigshafen (DE); ROTHER-NOEDING, Helen, 67056 Ludwigshafen (DE); WILLERSINN, Jochen Eckhard, 67056 Ludwigshafen (DE)
(74) Representative: BASF IP Association
(86) International application number: PCT/EP2021/084789
(87) International publication number: WO 2022/128684

(56) References cited:
- CN-A- 110 218 313
- US-A1- 2007 160 851
- "Handbook of Detergents, Part D: Formulation", 1 January 2006, article MICHAEL S. SHOWELL: "Chapters 1 and 3", pages: 1-26, 51 - 104, XP055605431
- SONNENSCHEIN MARK F ET AL: "Design, synthesis, and properties of novel amino-ester and amino-ester-alcohol polymer backbones", POLYMER, ELSEVIER SCIENCE PUBLISHERS B.V, GB, vol. 179, 19 July 2019 (2019-07-19), XP085817563, ISSN: 0032-3861, [retrieved on 20190719], DOI: 10.1016/J.POLYMER.2019.121663

## Description

The present invention relates to cleaning formulations and compositions according to the appended claims comprising biodegradable polymers that have structural elements of polyamines or of alkoxylated polyamines, and to the use of such polymers as ingredients in formulations and compositions within the field of application of fabric and home care, industrial and institutional cleaning, cosmetics, personal care, agricultural formulations, technical formulations and construction formulations.

Certain polyamines and alkoxylated polyamines containing ethoxylate chains or chain-parts and their use in fabric care and home care applications are well known. Various such products are commercially available. There is a constant desire to formulate more sustainable detergents and further improve biodegradability of the ingredients including detergent polymers.

Hence, there was a need for providing polyamines and alkoxylated polyamines showing favourable performance in detergents like fabric and home care products and applications such as laundry etc such as washing performance in laundry but providing at the same time an increased biodegradation compared to already known commercial products.

The invention further comprises the use of cleaning formulations and compositions comprising polymers as defined in the appended claims within the field of application of fabric and home care, industrial and institutional cleaning, cosmetics and personal care, preferably as ingredient to improve the washing performance, more preferably the primary washing performance in laundry applications, such formulations and compositions.

US 2007/160851 A1 lies in the technical field of copolymers comprising polyamine, poly-acrylate and mono-acrylate co-monomers. Such co-polymers are disclosed as Example A and B. Michael S. Showell, "Handbook of Detergents, Part D: Formulation" from 2006 discloses the use of multiple polymers as dispersants in detergent formulations.

The objective is achieved by the embodiments defined hereinafter:

### Embodiments

In one embodiment of the present invention inventive cleaning formulations or compositions comprise polymers comprising.
a) 5 - 40 wt.% of at least one amine having at least 2 amine-groups, such as 1,4- Bis(3-aminopropyl)piperazine, ethylene diamine, propylene diamine, butylene diamine, pentamethylene diamine, hexamethylene diamine, heptanediamine, octanediamine, preferably polyethylenimine(PEI), tris(2-aminoethyl)amine, Tris(3-aminopropyl)amine, 1-(3- 1,2-Diaminocyclohexan, 1,2-diaminopropane, 1,2-propylenediamine, 1,3-diaminopropane, 2-(2-Aminoethoxy)ethanol, 2 3-(2-Aminoethylamino) propylamine, 3-(cyclohexylamino)propylamine, 3,3'-dimethyl-4,4'-diaminodicyclohexylmethane, 4,4'-diaminodiphenyl sulfone, 4,4'-diaminodiphenylmethane, 4,4'-diaminodicyclohexylmethane, 4,4'-diaminodiphenylmethane, 4,7,10-trioxatridecane-1,13-diamine, 4,9-dioxadodecane-1,12-diamine, methylcyclohexyl 2,4-diamine and 2,6-diamine isomers, diethylenetriamine, dipropylene triamine, Ethylenediamine, Isophorone diamine, N-(2-aminoethyl)ethanolamine, N,N'-bis-(3-aminopropyl) ethylenediamine, N,N-bis-(3-aminopropyl)methylamine, N,N-dimethylcadaverin, neopentanediamine (2,2-Dimethyl propane-1,3-diamine), octamethylenediamine, piperazine; polyetheramines such as methoxypolyethylene glycol amine, 3,3'-oxybis(ethyleneoxy)bis(propylamine), O,O'-bis(2-aminopropyl) polypropylene glycol-block-polyethylene glycol-block-polypropylene glycol and analogous structures with different polyalkylene-oxide-chain structures; amino acids such as the particularly preferred histidine, lysine; further amines such as histamine, citrullin, diaminopimelic acid; naturally occurring amines such as chitosan and zein;
   more preferably diethylenetriamine (DETA), triethylene tetra amine, tetraethylenepentamine, pentaethylene hexamine, tris(2-aminoethyl)amine, N,N'-bis-(3-aminopropyl)-ethylenediamine (H₂N(CH₂)₃NHCH₂CH₂NH((CH₂)₃)₂NH₂ = "N4-amine"), and most preferred N4-amine and tris(2-aminoethyl)amine,
b) 10 - 65 wt.-% of at least one acrylate selected from
   such acrylate being selected from glycerol propoxylate (tri(meth)acrylate, di(trimethylolpropane) tetra(meth)acrylate, trimethylolpropane propoxylate tri(meth)acrylate, trimethylolpropane ethoxylate tri(meth)acrylate, pentaerythritol tetra(meth)acrylate, di-pentaerythritol penta- or hexa-(meth)acrylate, trimethylolpropane tri(meth)acrylate, trimethylolpropane ethoxylate tri(meth)acrylate, and polyethylene glycol di(meth)acrylate, preferred are the respective acrylates,
c) 10 - 75 wt.% of at least one mono-acrylate, such as stearyl polyethyleneglycol methacrylate 1100, hydroxyethylmethacrylate, 2-hydroxyethyl acrylate and/or stearyl polyethyleneglycol acrylate 1100, preferably poly(ethylene glycol) methyl ether methacrylate [H₂C=CCH₃CO₂(CH₂CH₂O)ₙCH₃], poly(ethylene glycol) methyl ether acrylate [H₂C=CHCO₂(CH₂CH₂O)ₙCH₃], stearyl polyethyleneglycol methacrylate 1100 (CAS No 70879-51-5) and/or stearyl polyethyleneglycol acrylate 1100, most preferred poly(ethylene glycol) methyl ether methacrylate [H₂C=CCH₃CO₂(CH₂CH₂O)ₙCH₃], with n being in the range from 5 to 40,
   wherein the sum of the components a), b) and c) is 100 weight percent .

Further embodiments are in listed in the dependent claims, and they are explained in more detail below.

In one embodiment of the present inventive composition, the entire component b) is comprised of triacrylates and trimethacrylates mentioned above. In another embodiment, the entire component b) is comprised of diacrylates or bis-methacrylates mentioned above. In one embodiment of the present invention, the amount of component a) is 10 to 35 wt.%, preferably up to 30, more preferably up to 28 and even more preferably about 25 and most preferably about 20 wt.%, of component b) is 10 to 65 wt.%, preferably up to 60 wt.%, more preferably from 15 to 55, even more preferably from 20 to 50 and most preferably from 30 to 45 wt.% such as about 40 wt.%, and of component c) is 10 to 75 wt.%, preferably from 10 to 60, more preferably from 10 to 50, even more preferably from 10 to 45, such as 25 to 50, 20 to 45 wt.% and about 40 wt.% of the described polymer. In one embodiment of the present invention, component b) is comprised from a combination of diacrylates and tri- or tetraacrylates mentioned above, wherein the amount of tri- or tetraacrylates is at most 50 mole % of the total amount of component b), preferably at most 30 mol%, more preferably at most 20 mole %, even more preferably at most 10 mole %, such as at most 5 mole %.Inventive formulations or compositions are useful in effective amounts to remove or release solids or water-insoluble substances from surfaces and/or to disperse such substances within liquids and/or solids.

Further embodiments of the invention are the following:

In a further embodiment, such polymers of the inventive composition comprise
a) 5 - 40 wt.% of at least one amine having at least 2 amine-groups, such as 1,4-Bis(3-aminopropyl)piperazine, ethylene diamine, propylene diamine, butylene diamine, pentamethylene diamine, hexamethylene diamine, heptanediamine, octanediamine, preferably polyethylenimine(PEI), tris(2-aminoethyl)amine, tris(3-aminopropyl)amine, more preferably diethylenetriamine (DETA), triethylene tetra amine, Tetraethylenepentamine, pentaethylene hexamine, most preferred N,N'-bis-(3-aminopropyl)-ethylenediamine,
b) 10 - 60 wt.% of at least one acrylate selected from glycerol propoxylate (1PO/OH) triacrylate, di(trimethylolpropane) tetraacrylate, trimethylolpropane propoxylate triacrylate, trimethylolpropane trimethacrylate, trimethylolpropane ethoxylate triacrylate, pentaerythritol tetraacrylate, dipentaerythritol penta/hexa-acrylate, trimethylolpropane trimethacrylate [H₂C=C(CH₃)CO₂CH₂]₃CC₂H₅], trimethylolpropane triacrylate [H₂C=CHCO₂CH₂]₃CC₂H₅], trimethylolpropane ethoxylate triacrylate [H₂C=CHCO₂(CH₂CH₂O)ₙCH₂]₃CC₂H₅] and/or di(ethylene glycol) dimethacrylate [H₂C=C(CH₃)CO₂CH₂CH₂]₂O, poly(ethylene glycol) diacrylate [H₂C=CHCO(OCH₂CH₂)ₙOCOCH=CH_{2]}, more preferably trimethylolpropane ethoxylate triacrylate [H₂C=CHCO₂(CH₂CH₂O)ₙCH₂]₃CC₂H₅], trimethylolpropane triacrylate and/or poly(ethylene glycol) diacrylate, most preferred trimethylolpropane ethoxylate triacrylate and trimethylolpropane trimethacrylate, and trimethylolpropane triacrylate, and
c) 15- 75 wt.% of at least one mono-acrylate, such as stearyl polyethyleneglycol methacrylate 1100, hydroxyethylmethacrylate, 2-hydroxyethyl acrylate and/or stearyl polyethylene glycol acrylate 1100, preferably poly(ethylene glycol) methyl ether methacrylate [H₂C=CCH₃CO₂(CH₂CH₂O)ₙCH₃], poly(ethylene glycol) methyl ether acrylate [H₂C=CHCO₂(CH₂CH₂O)ₙCH₃], Stearyl polyethylene glycol Methacrylate 1100 (CAS No 70879-51-5) and/or stearyl polyethylene glycol acrylate 1100, most preferred poly(ethylene glycol) methyl ether methacrylate,
   with the proviso that the sum of the compounds a), b) and c) adds up to 100 weight percent.

In one embodiment, the amount of component a) is 10 to 35 wt.%, preferably up to 30, more preferably up to 25 and even more preferably about 20 wt.%, of component b) is 10 to 60 wt.%, preferably from 15 to 55, more preferably from 20 to 50 and even more preferably from 30 to 45 wt.% such as about 40 wt.%, and of component c) is 15 to 75 wt.%, preferably from 20 to 60, more preferably from 25 to 50 and even more preferably from 20 to 45 wt.% such as about 40 wt.%.

In one embodiment, the amount of respective tris-acrylates or higher acrylates are at most 50 mole % of the total amount of component b), preferably at most 30 mol%, more preferably at most 20 mole %, even more preferably at most 10 mole %, such as at most 5 mole %.

In one embodiment the amount of component a) is 15 to 35 wt.%, preferably up to 33, more preferably from 20 to 30 and even more preferably about 25 wt.%, of component b) is 10 to 60 wt.%, preferably from 20 to 55, more preferably from 25 to 53, even more preferably from 30 to 50wt.%, most preferred from 40 to 50 wt.% such as about 40 wt.%, and of component c) is 15 to 75 wt.%, preferably from 20 to 55, more preferably from 23 to 50, and even more preferably up to 45 wt.% or even up to 40 wt.% such as up to 35 wt.%, and specifically about 40 wt.%.

Further described herein is a polymer as disclosed above in the inventive composition and is made by a process comprising the steps of
A) reacting
   a) 15 - 40 wt.% of at least one amine having at least 2 amine-groups, such as 1,4-Bis(3-aminopropyl)piperazine, ethylene diamine, propylene diamine, butylene diamine, pentamethylene diamine, hexamethylene diamine, heptanediamine, octanediamine, preferably polyethylenimine(PEI), tris(2-aminoethyl)amine, Ttis(3-aminopropyl)amine, more preferably diethylenetriamine (DETA), triethylene tetra amine, tetraethylenepentamine, pentaethylene hexamine, more preferably N4-amine, and
   b) 10 - 60 wt.% of at least one acrylate selected from glycerol propoxylate (1PO/OH) triacrylate, di(trimethylolpropane) tetraacrylate, trimethylolpropane propoxylate triacrylate, trimethylolpropane trimethacrylate, trimethylolpropane ethoxylate triacrylate, pentaerythritol tetraacrylate, dipentaerythritol penta/hexa-acrylate, 1,1,1-trimethylolpropane trimethacrylate [H₂C=C(CH₃)CO₂CH₂]₃CC₂H₅], 1,1,1-trimethylolpropane triacrylate, 1,1,1-trimethylolpropane ethoxylate triacrylate [H₂C=CHCO₂(CH₂CH₂O)ₙCH₂]₃CC₂H₅], di(ethylene glycol) dimethacrylate [H₂C=C(CH₃)CO₂CH₂CH₂]₂O, poly(ethylene glycol) diacrylate [H₂C=CHCO(OCH₂CH₂)ₙOCOCH=CH₂] with n in the range from 5 to 14, more preferably 1,1,1-trimethylolpropane ethoxylate triacrylate, 1,1,1-trimethylolpropane triacrylate and poly(ethylene glycol) diacrylate, even more preferred are 1,1,1-trimethylolpropane ethoxylate triacrylate and 1,1,1-trimethylolpropane trimethacrylate, and 1,1,1-trimethylolpropane triacrylate, in a Michael-addition to obtain an amine-containing polyamine, and
B) reacting the polyamine obtained in step A) with
   c) 15- 75 wt.% of at least one mono-acrylate, such as Stearyl Polyethyleneglycol Methacrylate 1100, Hydroxyethylmethacrylate, 2-Hydroxyethyl acrylate and/or Stearyl Polyethyleneglycol acrylate 1100, preferably poly(ethylene glycol) methyl ether methacrylate [H₂C=CCH₃CO₂(CH₂CH₂O)ₙCH₃], Poly(ethylene glycol) methyl ether acrylate [H₂C=CHCO₂(CH₂CH₂O)nCH₃], stearyl polyethyleneglycol methacrylate 1100 (CAS No 70879-51-5) or stearyl polyethyleneglycol acrylate 1100, even more preferred polyethylen glycol methyl ether methacrylate [H₂C=CCH₃CO₂(CH₂CH₂O)ₙCH₃],
      - with the proviso that the sum of the compounds a), b) and c) add up to 100 weight percent., to obtain a polymer that is preferably biodegradable,
with the reaction in step A) taking place preferably essentially in substance (i.e. essentially without added solvent) and preferably taking place until essentially all acrylate groups have reacted, and with the reaction in step B) taking place preferably essentially in substance (i.e. essentially without added solvent) and preferably taking place until essentially all acrylate groups have reacted.

Further described herein is that the reactions of steps A) and B) are performed independently at 50 to 150 °C at 0,5 to 5 bar pressure, preferably 50 to 110 °C at ambient pressure, more preferably at from 70 °C, and even more preferably at from 80 °C, such as at/from 55, 60, 65, 75, 85, 90 or 95 °C, for a period of from 3 to 15 hours, preferably 5 to 12 hours, more preferably 6 to 10 hours, such as 7, 8 or 9 hours.

The above polymers are applied in formulations or compositions within the field of application of fabric and home care, industrial and institutional cleaning, cosmetics, personal care, technical formulations such as paints and colours, formulations in the field of construction such as cement and cement-containing formulations and the like containing inorganic materials in the need of dispersing and or stabilizing them, and agricultural formulations, in each application preferably as dispersant to remove or release from surfaces and/or to disperse substances within liquids and/or solids.

### General process description

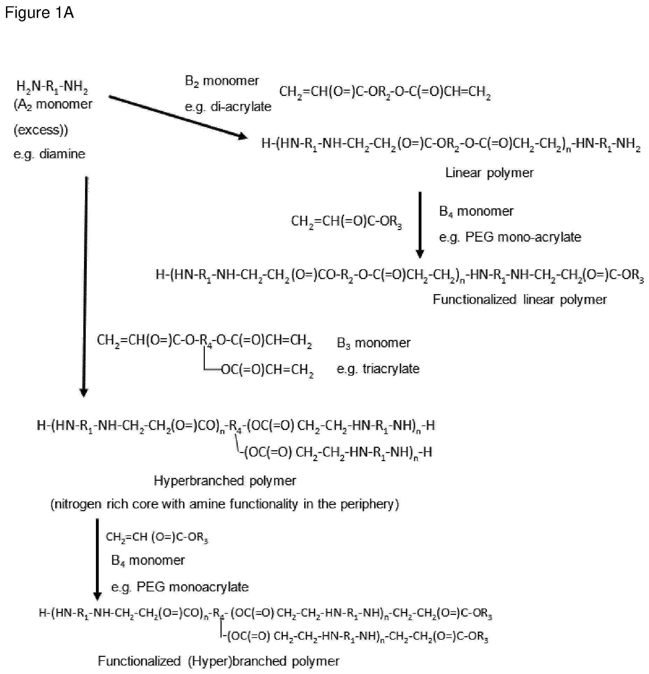

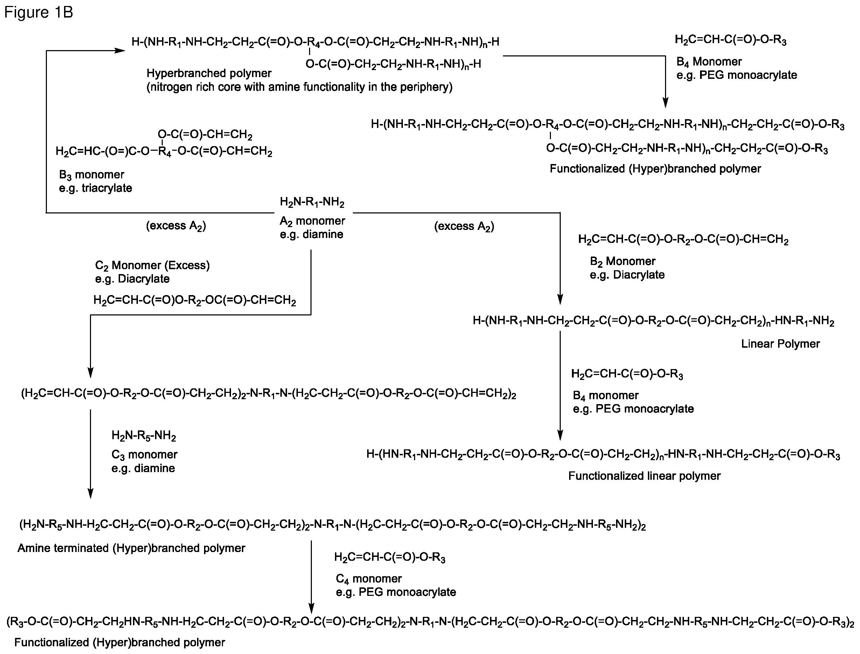

Not part of the invention and further described herein is that the general scheme of the process is shown in Figure 1 A excluding the optional step B. Figure 1B includes that optional process step B.

Figure 1 is intended to show the general synthetic route; hence the residue R1, R2, R3, R4 and R5 are shown as placeholder for suitable chemical groupings such as alkyl, aryl, alkylaryl-groupings which may contain further hetero-atom-containing substituents.

Specifically, R1, R2, R3, R4 and R5 are shown as placeholder for alkyl, aryl, alkylaryl-groupings which may - but mostly preferably do not - contain further groups such as hydroxy-groups, amide-groups, carboxyester-groups, preferably only hydroxy-groups, and most preferably do not contain such further groups.

Each of those residuals may be chosen independently of each other as defined further below in the description of the general process:

The process employs in principle two approaches to obtain the polymers used in the inventive compositions, which either lead to a linear polymer or to a branched (or - depending on the degree of branching) a hyper-branched polymer:
The process starts with providing an amine compound having at least two amine groups ("A2"-monomer in Figure 1).

A linear polymer is obtained by reacting one or more A2-monomer(s) (a diamine) with one or more B2-monomer(s) (a diacrylate monomer) to obtain a linear polymer. This linear polymer is further reacted with B4-monomer (a mono-acrylate, preferably a hydrophilic acrylate-monomer) to obtain the functionalized polyamine. This could be further modified by alkoxylation using standard procedures and conditions (which is not shown in Figure 1).

The branched polymer is obtained by reacting one or more A2-monomer(s) with at least a defined amount of one or more B3-monomer(s) (an acrylate having at least three polymerizable olefinic units, e.g. a triacrylate) and optionally some of one or more B2-monomer(s) (a diacrylate monomer) to obtain a branched polymer or - with large relative amounts of B3 over B2 - a hyper-branched polymer. This (hyper-)branched polymer is further reacted with one or more B4-monomer(s) (a mono-acrylate, preferably a hydrophilic acrylate-monomer) to obtain the functionalized polyamine. This could be also further modified by alkoxylation (which is not shown in Figure 1).

By selecting the relative amounts (the ratio) of B2- versus B3-monomer(s) and also the relative amount of B2- versus B3-monomer(s) to the amount of A2-monomer(s), the structure of the polyamine polymers can be varied in a very large extent, to obtain linear polymers, slightly branched polymers to highly branched polymers such as even hyper-branched polymers. By further selecting as A2-monomer not only diamines but also amine with more than 2 amine-groups in the molecule and by also choosing mixtures of various different amines (which may have different numbers of amine-groups in the respective molecule, i.e. choosing a mixture of diamine plus triamine) further possibilities to vary the polymer structure of the branched polymer are also provided.

The Michael-reaction of the monomers of component a) and b) as defined above can be performed in various orders to lead to linear polymers: one or more A2 could be reacted with one or more B2 in a single reaction or in stepwise reactions, such as one or more A2 plus one or more B2, then another or the same A2-monomer(s), then another or the same B2-monomer(s) etc, to finally obtain a linear polymer composed of one or more A2- and one or more B2-monomers.

The same holds true of course for the process path leading to branched polymers: one or more A2 could be reacted with B (which could be one or more B2 and/or one or more B3 provided that a certain amount of at least one B3 has to be present) in a single reaction or in stepwise reactions, such as one or more A2 plus one or more B2 and/or B3 (with at least one B3 being present in the required amounts), then another and/or the same A2-monomer(s), then another or the same B2-monomer(s) and/or B3-monomer(s) etc, to finally obtain a linear polymer composed of one or more A2- and one or more B2-monomers and/or one or more B3-monomer(s) (provided that at least one B3 is employed in the required amounts).

All of those variations and modifications as generally described before leading to polyamine polymers of the inventive composition are disclosed.

By further alkoxylating those polyamines a further modification leads to alkoxylated polyamines. By suitably choosing the alkoxides and mixtures of more than one alkoxide further variations of the structure are easily obtained. By reacting e.g.at first one alkoxide and then a second one a block-structure of a polyalkoxide-chain attached to the inventive-polyamines can be obtained. By such choice of alkoxides the hydrophilicity/hydrophobicity of such polyalkoxy-sidechains can be tuned to achieve the desired overall hydrophilic-hydrophobic balance of the alkoxylated polyamine.

Such polyalkoxy-chains can be of course also introduced by using as mono-acrylate-component a polyalkylene oxide-(meth)acrylate-monomer such as e.g. the Jeffamine-type monomers. Even when such polyalkylene oxide-(meth)acrylate-monomers are employed, a further alkoxylation is still a possible reaction, and such further alkoxylated polyamine comprising polyalkylene oxide-(meth)acrylate-monomers as "component c)" (as defined in Embodiment 1 and in more specificity in further Embodiments) are also disclosed.

All of those variations and modifications as generally described before leading to polyamine polymers and alkoxylated polyamine polymers are dislosed; the general composition of the polyamines and thus also alkoxylated polyamines are described in below embodiments.

Generally, as used herein, the term "obtainable by" means that corresponding products do not necessarily have to be produced (i.e. obtained) by the corresponding method or process described in the respective specific context, but also products are comprised which exhibit all features of a product produced (obtained) by said corresponding method or process, wherein said products were actually not produced (obtained) by such method or process. However, the term "obtainable by" also comprises the more limiting term "obtained by", i.e. products which were actually produced (obtained) by a method or process described in the respective specific context.

"Branched" / "hyper-branched" is a colloquial differentiation to distinguish the degree of branching, which depends on the starting material employed, i.e. the amount and functionalities in the starting material and their relative ratio to each other. This term has besides such general distinction between "low amount of branching" and "high amount of branching" no further differentiation in terms of chemical structure.

"Bio-degradable", "biodegradation" with or without the addition of "as tested under standard conditions" mean the biodegradation and - if percentages are given such as "30% biodegradation/bio-degradable" of the mentioned substance, compound or formulation, which has been determined using biodegradability tests according to ISO14851 or ISO14852 (both in water), OECD 301F test method, or according to ASTM D.6691 (in marine water) or according to ISO17556 (in soil); the test method - in case of differing results, and when both test conditions are applicable and possible to be used, the test according to OECD 301F shall be the decisive one.

The following terms - and other terms of the art not listed below - have their ordinary meaning unless specifically defined otherwise within this disclosure:
Molecular weight descriptors Mw, Mn and polydispersity (PDI as polydispersity index) of the molecular weight; pH-value; 1H-NMR.

All percentages given are weight percentages based on the total weight of that composition, formulation, dispersion, feed, mixture etc., unless specifically defined otherwise; abbreviated as "wt. %".

Generally, as used herein, the term "obtainable by" means that corresponding products do not necessarily have to be produced (i.e. obtained) by the corresponding method or process described in the respective specific context, but also products are comprised which exhibit all features of a product produced (obtained) by said corresponding method or process, wherein said products were actually not produced (obtained) by such method or process. However, the term "obtainable by" also comprises - and preferably means - the more limiting term "obtained by", i.e. products which were actually produced (obtained) by a method or process described in the respective specific context.

The term "about" denotes that a small deviation of the actual numerical value given is meant to be encompassed by such term: Thus, "about 50 weight%" shall also encompass plus/minus 10 percent deviation of the original value given in numbers, and hence encompass values of "from 45 to 55 weight%", but preferably encompass plus/minus 5 percent deviation, more preferably plus/minus 3 percent deviation, even more preferably plus/minus 1 percent deviation, and accordingly within such ranges - as applicable for the beforementioned ranges - all other numbers and values in between 10 and 0 (zero), and shall most preferably only consist of the numerical value given.

The term "essentially" as used for example in "essentially in substance", "essentially without added solvent" and "essentially all acrylate groups" shall mean that for example a reaction is performed close to completeness, i.e. close to/almost 100 percent, or that a solvent or any other group denoted with such term is (or is not) present to almost completeness/complete absence and the like uses of such term. In a preferred form "essentially" shall encompass small deviations typically present in commercial operations, for example when technical grade ingredients such as solvents etc are employed which are never "100% pure" but "technical grade", or when values being measured show the absence of certain descriptors, such as for example in "essentially all acrylate groups have reacted (according to method X)" which means that according to method X no acrylate groups are detectable.

The polymers as described above are advantageously employed in formulations or compositions within the field of application of fabric and home care, industrial and institutional cleaning, cosmetics, personal care, lacquer and colorants formulations, technical applications, agricultural formulations, in each application preferably as dispersant and/or soil release agent to release soil and other dirt from surfaces and/or disperse soil, dirt, organic and/or inorganic solid particles in a liquid or solid environment such as liquid formulations or powder formulations or within solids such as extruded and the like particles or within solid films.

In one embodiment of the present invention, inventive formulations or compositions comprise said 0.2 to 10% by weight of the polymer, referring to the total solids content of said formulation or composition. The total solids content is determined by drying at 150 to 200°C to constant weight with infrared light.

### Compositions for Fabric and Home Care

Such compositions and formulations include those designed for cleaning soiled material or surfaces of any kind including but not limited to laundry cleaning compositions and detergents, fabric softening compositions, fabric enhancing compositions, fabric freshening compositions, laundry prewash, laundry pretreat, laundry additives, spray products, dry cleaning agent or composition, laundry rinse additive, wash additive, post-rinse fabric treatment, ironing aid, dish washing compositions, hard surface cleaning compositions, unit dose formulation, delayed delivery formulation, detergent contained on or in a porous substrate or nonwoven sheet, and other suitable forms that may be apparent to one skilled in the art in view of the teachings herein. Such compositions may be used as a pre-laundering treatment, a post-laundering treatment, or may be added during the rinse or wash cycle of the laundering operation. The cleaning compositions may have a form selected from liquid, powder, single-phase or multi-phase unit dose, pouch, tablet, gel, paste, bar, or flake. Included are specifically the Cleaning Compositions as defined further below.

### Cleaning Composition

As used herein the phrase "cleaning composition" includes compositions and formulations designed for cleaning soiled material. Such compositions include but are not limited to, laundry cleaning compositions and detergents, fabric softening compositions, fabric enhancing compositions, fabric freshening compositions, laundry prewash, laundry pretreat, laundry additives, spray products, dry cleaning agent or composition, laundry rinse additive, wash additive, post-rinse fabric treatment, ironing aid, dish washing compositions, hard surface cleaning compositions, unit dose formulation, delayed delivery formulation, detergent contained on or in a porous substrate or nonwoven sheet, and other suitable forms that may be apparent to one skilled in the art in view of the teachings herein. Such compositions may be used as a pre-laundering treatment, a post-laundering treatment, or may be added during the rinse or wash cycle of the laundering operation. The cleaning compositions may have a form selected from liquid, powder, single-phase or multi-phase unit dose, pouch, tablet, gel, paste, bar, or flake.

Preferably, the cleaning compositions of the present invention are those for the field of laundry cleaning compositions and detergents for laundry, more preferably, for primary washing within laundry applications, even more specifically, the primary washing for removal of clay-based dirty spots such as those on fabrics.

### Industrial and institutional cleaning

Such compositions and formulations include those designed for cleaning soiled material or surfaces of any kind, such as hard surface cleaners for surfaces of any kind, including tiles, carpets, PVC-surfaces, wooden surfaces, metal surfaces, lacquered surfaces.

The cleaning compositions of the invention preferably comprise a surfactant system in an amount sufficient to provide desired cleaning properties. In some embodiments, the cleaning composition comprises, by weight of the composition, from about 1% to about 70% of a surfactant system. In other embodiments, the liquid cleaning composition comprises, by weight of the composition, from about 2% to about 60% of the surfactant system. In further embodiments, the cleaning composition comprises, by weight of the composition, from about 5% to about 30% of the surfactant system. The surfactant system may comprise a detersive surfactant selected from anionic surfactants, nonionic surfactants, cationic surfactants, zwitterionic surfactants, amphoteric surfactants, ampholytic surfactants, and mixtures thereof. Those of ordinary skill in the art will understand that a detersive surfactant encompasses any surfactant or mixture of surfactants that provide cleaning, stain removing, or laundering benefit to soiled material.

The cleaning compositions of the invention may also - and preferably do - contain adjunct cleaning additives (also abbreviated herein as "adjuncts"). Suitable adjunct cleaning additives include builders, structurants or thickeners, clay soil removal/anti-redeposition agents, polymeric soil release agents, polymeric dispersing agents, polymeric grease cleaning agents, enzymes, enzyme stabilizing systems, bleaching compounds, bleaching agents, bleach activators, bleach catalysts, brighteners, dyes, hueing agents, dye transfer inhibiting agents, chelating agents, suds suppressors, softeners, and perfumes.

Another subject matter of the present invention is the use of at least one polymer described herein (named sometimes "polymer (P1)" (without limiting the "polymer" to only that of example 1, i.e. this term "polymer (P1)" not meaning "polymer of Example 1" but also encompassing that polymer of Example 1) in laundry detergents, in fabric and home care products and/or in cosmetic formulations, preferably in cleaning compositions and/or in fabric and home care products. The embodiments and examples as described herein further specify such claimed uses and compositions and formulations.

Another subject-matter of the present invention is, therefore, a laundry detergent, a cleaning composition, fabric and home care product and/or cosmetic formulations, comprising at least one polymer as described above.

Preferably, the inventive composition is a laundry detergent, a cleaning composition and/or fabric and home care product, comprising at least one polymer as described above, providing improved removal, dispersion and/or emulsification of soils and / or modification of treated surfaces.

Laundry detergents, cleaning compositions and/or fabric and home care products as such are known to a person skilled in the art. Any composition etc. known to a person skilled in the art, in connection with the respective use, can be employed within the context of the present invention. The compositions can be in any form, namely, in the form of a liquid; a solid such as a powder, granules, agglomerate, paste, tablet, pouches, bar, gel; an emulsion; types delivered in dual- or multi-compartment containers; a spray or foam detergent; premoistened wipes (i.e., the cleaning composition in combination with a nonwoven material such as that discussed in US 6,121,165, Mackey, et al.); dry wipes (i.e., the cleaning composition in combination with a nonwoven materials, such as that discussed in US 5,980,931, Fowler, et al.) activated with water by a consumer; and other homogeneous or multiphase consumer cleaning product forms.

At least one polymer as described herein is present in said inventive compositions at a concentration of 0.05 to 20 weight%, preferably from about 0.05% to 15%, more preferably from about 0.1% to about 10%, and most preferably from about 0.5% to about 5%, in relation to the total weight of such composition or product.

In one preferred embodiment, the cleaning composition of the present invention is a liquid or solid laundry detergent composition. In another embodiment, the cleaning composition of the present invention is a hard surface cleaning composition that may be used for cleaning various surfaces such as hard wood, tile, ceramic, plastic, leather, metal, glass. In another embodiment, the cleaning composition is designed to be used in a personal care and pet care compositions such as shampoo composition, body wash, liquid or solid soap.

In another embodiment the cleaning composition of the invention is a dish cleaning composition, such as liquid hand dishwashing compositions, solid automatic dishwashing compositions, liquid automatic dishwashing compositions, and tab/unit dose forms of automatic dishwashing compositions.

Quite typically, cleaning compositions herein such as laundry detergents, laundry detergent additives, hard surface cleaners, synthetic and soap-based laundry bars, fabric softeners and fabric treatment liquids, solids and treatment articles of all kinds will require several adjuncts. Common cleaning adjuncts for cleaning compositions include surfactants, builders, cobuilders, dispersant polymers, dye transfer inhibiting agents, anti-redeposition agents, enzymes, suds boosters, suds suppressors (antifoams) and the like, color speckles, silver care, anti-tarnish and/or anti-corrosion agents, dyes, pigments, alkalinity sources, hydrotropes, anti-oxidants, enzyme stabilizing agents, pro-perfumes, perfumes, solubilizing agents, carriers and processing aids.

Liquid compositions additionally can comprise rheology control agents and solvents, solid compositions additionally can comprise fillers, bleaches, bleach activators and catalytic materials.

Suitable examples of such cleaning adjuncts and levels of use are found in WO 99/05242, U.S. Patent Nos. 5,576,282, 6,306,812 B1 and 6,326,348 B1.

The laundry detergent, the cleaning composition and/or the fabric and home care product according to the present invention preferably additionally comprise a surfactant system and, if appropriate, other adjuncts as described above. Such a surfactant system may be composed from one surfactant or from a combination of surfactants selected from anionic surfactants, nonionic surfactants, cationic surfactants, zwitterionic surfactants, amphoteric surfactants, ampholytic surfactants, and mixtures thereof. Those of ordinary skill in the art will understand that a surfactant system for detergents encompasses any surfactant or mixture of surfactants that provide cleaning, stain removing, or laundering benefit to soiled material.

Nonlimiting examples of anionic co-surfactants useful herein include: C₉-C₂₀ linear alkylbenzenesulfonates (LAS), C₁₀-C₂₀ primary, branched chain and random alkyl sulfates (AS); C₁₀-C₁₈ secondary (2,3) alkyl sulfates; C10-C18 alkyl alkoxy sulfates (AExS) wherein x is from 1 to 30; C₁₀-C₁₈ alkyl alkoxy carboxylates comprising 1 to 5 ethoxy units; mid-chain branched alkyl sulfates as discussed in US 6,020,303 and US 6,060,443; mid-chain branched alkyl alkoxy sulfates as discussed in US 6,008,181 and US 6,020,303; modified alkylbenzene sulfonate (MLAS) as discussed in WO 99/05243, WO 99/05242 and WO 99/05244; methyl ester sulfonate (MES); and alpha-olefin sulfonate (AOS). Preferred anionic surfactants are C₁₀-C₁₅ linear alkylbenzenesulfonates, C₁₀-C₁₈ alkylethersulfates with 1-5 ethylenoxy units and C₁₀-C₁₈ alkylsulfates.

Non-limiting examples of nonionic co-surfactants include: C8-C18 alkyl ethoxylates, such as, NEODOL^{®} nonionic surfactants from Shell; ethylenoxide/propylenoxide block alkoxylates as PLURONIC^{®} from BASF; C₁₄-C₂₂ mid-chain branched alkyl alkoxylates, BAEx, wherein x is from 1 to 30, as discussed in US 6,153,577, US 6,020,303 and US 6,093,856; alkylpolysaccharides as discussed in U.S. 4,565,647 Llenado, issued January 26, 1986; specifically alkylpolyglycosides as discussed in US 4,483,780 and US 4,483,779; polyhydroxy fatty acid amides as discussed in US 5,332,528; and ether capped poly(oxyalkylated) alcohol surfactants as discussed in US 6,482,994 and WO 01/42408.

Preferred nonionic surfactants are C12/14 and C16/18 fatty alkoholalkoxylates, C13/15 oxoalkoholalkoxylates, C13-alkoholalkoxylates, and 2-propylheptylalkoholalkoxylates with 3 - 15 ethoxy units or with 1-3 propoxy- and 2-15 ethoxy units.

Non-limiting examples of semi-polar nonionic surfactants include: water-soluble amine oxides containing one alkyl moiety of from about 8 to about 18 carbon atoms and 2 moieties selected from the group consisting of alkyl moieties and hydroxyalkyl moieties containing from about 1 to about 3 carbon atoms; and water-soluble sulfoxides containing one alkyl moiety of from about 10 to about 18 carbon atoms and a moiety selected from the group consisting of alkyl moieties and hydroxyalkyl moieties of from about 1 to about 3 carbon atoms. See WO 01/32816, US 4,681,704, and US 4,133,779.

Preferred semi-polar nonionic co-surfactants are C8-C18 alkyl-dimethyl aminoxides and C8-C18 alkyl-di(hydroxyethyl)aminoxide.

Non-limiting examples of cationic co-surfactants include: the quaternary ammonium surfactants, which can have up to 26 carbon atoms include: alkoxylated quaternary ammonium (AQA) surfactants as discussed in US 6,136,769; dimethyl hydroxyethyl quaternary ammonium as discussed in US 6,004,922; dimethyl hydroxyethyl lauryl ammonium chloride; polyamine cationic surfactants as discussed in WO 98/35002, WO 98/35003, WO 98/35004, WO 98/35005, and WO 98/35006; cationic ester surfactants as discussed in US patents Nos. 4,228,042, 4,239,660 4,260,529 and US 6,022,844; and amino surfactants as discussed in US 6,221,825 and WO 00/47708, specifically amido propyldimethyl amine (APA).

In one embodiment the polymers as described above may be utilized in laundry detergents or cleaning compositions comprising a surfactant system comprising C10-C15 alkyl
benzene sulfonates (LAS) as the primary surfactant and one or more co-surfactants selected from nonionic, cationic, other anionic surfactants or mixtures thereof.

In a second embodiment the inventive-polymers as described above may be utilized in laundry detergents or cleaning compositions comprising C8-C18 linear or branched alkyl ethersulfate with 3-10 ethylenoxy-units as the primary surfactant and one or more co-surfactants selected from nonionic, cationic, other anionic surfactants or mixtures thereof In a third embodiment the polymers as described above may be utilized in laundry detergents or cleaning compositions comprising C10-C18 alkyl ethoxylate surfactant as the primary surfactant and one or more co-surfactants selected from other nonionic, cationic, anionic surfactants or mixtures thereof.

The selection of co-surfactants in these embodiments may be dependent upon the application and the desired benefit.

The laundry formulations according to the invention can be liquid, gels, or solid compositions, solid embodiments encompassing, for example, powders and tablets. Liquid compositions are preferred and may be packaged as unit doses.

In one embodiment of the present invention, the polymer as described above is a component of a laundry formulation (also called laundry care composition in this specification) that additionally comprises at least one surfactant, preferably at least one **anionic surfactant.**

Examples of suitable **anionic surfactants** are alkali metal and ammonium salts of C₈-C₁₂-alkyl sulfates, of C₁₂-C₁₈-fatty alcohol ether sulfates, of C₁₂-C₁₈-fatty alcohol polyether sulfates, of sulfuric acid half-esters of ethoxylated C₄-C₁₂-alkylphenols (ethoxylation: 3 to 50 mol of ethylene oxide/mol), of C₁₂-C₁₈-alkylsulfonic acids, of C₁₂-C₁₈ sulfo fatty acid alkyl esters, for example of C₁₂-C₁₈ sulfo fatty acid methyl esters, of C₁₀-C₁₈-alkylarylsulfonic acids, preferably of n-C₁₀-C₁₈-alkylbenzene sulfonic acids, of C₁₀-C₁₈ alkyl alkoxy carboxylates and of soaps such as for example C₈-C₂₄-carboxylic acids. Preference is given to the alkali metal salts of the aforementioned compounds, particularly preferably the sodium salts.

In one embodiment of the present invention, anionic surfactants are selected from n-C₁₀-C₁₈-alkylbenzene sulfonic acids and from fatty alcohol polyether sulfates, which, within the context of the present invention, are in particular sulfuric acid half-esters of ethoxylated C₁₂-C₁₈-alkanols (ethoxylation: 1 to 50 mol of ethylene oxide/mol), preferably of n-C₁₂-C₁₈-alkanols.

In one embodiment of the present invention, also alcohol polyether sulfates derived from branched (i.e. synthetic) C₁₁-C₁₈-alkanols (ethoxylation: 1 to 50 mol of ethylene oxide/mol) may be employed.

Preferably, the alkoxylation group of both types of alkoxylated alkyl sulfates, based on C₁₂-C₁₈-fatty alcohols or based on branched (i.e. synthetic) C₁₁-C₁₈-alcohols, is an ethoxylation group and an average ethoxylation degree of any of the alkoxylated alkyl sulfates is 1 to 5, preferably 1 to 3.

Preferably, the laundry detergent formulation of the present invention comprises from at least 1 wt.% to 50 wt.%, preferably in the range from greater than or equal to about 2 wt.% to equal to or less than about 30 wt.%, more preferably in the range from greater than or equal to 3 wt.% to less than or equal to 25 wt.%, and most preferably in the range from greater than or equal to 5 wt.% to less than or equal to 25 wt.% of one or more anionic surfactants as described above, based on the particular overall composition, including other components and water and/or solvents.

Compositions according to the invention may comprise at least one **builder.** In the context of the present invention, no distinction will be made between builders and such components elsewhere called "co-builders". Examples of builders are complexing agents, hereinafter also referred to as complexing agents, ion exchange compounds, and precipitating agents. Builders are selected from citrate, phosphates, silicates, carbonates, phosphonates, amino carboxylates and polycarboxylates.

In the context of the present invention, the term citrate includes the mono- and the dialkali metal salts and in particular the mono- and preferably the trisodium salt of citric acid, ammonium or substituted ammonium salts of citric acid as well as citric acid. Citrate can be used as the anhydrous compound or as the hydrate, for example as sodium citrate dihydrate. Quantities of citrate are calculated referring to anhydrous trisodium citrate.

The term phosphate includes sodium metaphosphate, sodium orthophosphate, sodium hydrogenphosphate, sodium pyrophosphate and polyphosphates such as sodium tripolyphosphate. Preferably, however, the composition according to the invention is free from phosphates and polyphosphates, with hydrogenphosphates being subsumed, for example free from trisodium phosphate, pentasodium tripolyphosphate and hexasodium metaphosphate ("phosphate-free"). In connection with phosphates and polyphosphates, "free from" should be understood within the context of the present invention as meaning that the content of phosphate and polyphosphate is in total in the range from 10 ppm to 0.2% by weight of the respective composition, determined by gravimetry.

The term "carbonates" includes alkali metal carbonates and alkali metal hydrogen carbonates, preferred are the sodium salts. Particularly preferred is Na₂CO₃.

Examples of phosphonates are hydroxyalkanephosphonates and aminoalkanephosphonates. Among the hydroxyalkanephosphonates, the 1-hydroxyethane-1,1-diphosphonate (HEDP) is of particular importance as builder. It is preferably used as sodium salt, the disodium salt being neutral and the tetrasodium salt being alkaline (pH 9). Suitable aminoalkanephosphonates are preferably ethylene diaminetetramethylenephosphonate (EDTMP), diethylenetriaminepenta-methylenephosphonate (DTPMP), and also their higher homologues. They are preferably used in the form of the neutrally reacting sodium salts, e.g. as hexasodium salt of EDTMP or as hepta- and octa-sodium salts of DTPMP.

Examples of amino carboxylates and polycarboxylates are nitrilotriacetates, ethylene diamine tetraacetate, diethylene triamine pentaacetate, triethylene tetraamine hexaacetate, propylene diamines tetraacetic acid, ethanol-diglycines, methylglycine diacetate, and glutamine diacetate. The term amino carboxylates and polycarboxylates also include their respective non-substituted or substituted ammonium salts and the alkali metal salts such as the sodium salts, in particular of the respective fully neutralized compound.

Silicates in the context of the present invention include in particular sodium disilicate and sodium metasilicate, alumosilicates such as for example zeolites and sheet silicates, in particular those of the formula α-Na₂Si₂O₅, β-Na₂Si₂O₅, and δ-Na₂Si₂O₅.

Compositions according to the invention may contain one or more builder selected from materials not being mentioned above. Examples of builders are α-hydroxypropionic acid and oxidized starch.

In one embodiment of the present invention, builder is selected from polycarboxylates. The term "polycarboxylates" includes non-polymeric polycarboxylates such as succinic acid, C₂-C₁₆-alkyl disuccinates, C₂-C₁₆-alkenyl disuccinates, ethylene diamine N,N'-disuccinic acid, tartaric acid diacetate, alkali metal malonates, tartaric acid monoacetate, propanetricarboxylic acid, butanetetracarboxylic acid and cyclopentanetetracarboxylic acid.

Oligomeric or polymeric polycarboxylates are for example polyaspartic acid or in particular alkali metal salts of (meth)acrylic acid homopolymers or (meth)acrylic acid copolymers.

Suitable co-monomers are monoethylenically unsaturated dicarboxylic acids such as maleic acid, fumaric acid, maleic anhydride, itaconic acid and citraconic acid. A suitable polymer is in particular polyacrylic acid, which preferably has a weight-average molecular weight M_{w} in the range from 2000 to 40 000 g/mol, preferably 2000 to 10 000 g/mol, in particular 3000 to 8000 g/mol. Further suitable copolymeric polycarboxylates are in particular those of acrylic acid with methacrylic acid and of acrylic acid or methacrylic acid with maleic acid and/or fumaric acid.

It is also possible to use copolymers of at least one monomer from the group consisting of monoethylenically unsaturated C₃-C₁₀-mono- or C₄-C₁₀-dicarboxylic acids or anhydrides thereof, such as maleic acid, maleic anhydride, acrylic acid, methacrylic acid, fumaric acid, itaconic acid and citraconic acid, with at least one hydrophilically or hydrophobically modified co-monomer as listed below.

Suitable hydrophobic co-monomers are, for example, isobutene, diisobutene, butene, pentene, hexene and styrene, olefins with ten or more carbon atoms or mixtures thereof, such as, for example, 1-decene, 1-dodecene, 1-tetradecene, 1-hexadecene, 1-octadecene, 1-eicosene, 1-docosene, 1-tetracosene and 1-hexacosene, C₂₂-α-olefin, a mixture of C₂₀-C₂₄-α-olefins and polyisobutene having on average 12 to 100 carbon atoms per molecule.

Suitable hydrophilic co-monomers are monomers with sulfonate or phosphonate groups, and also non-ionic monomers with hydroxyl function or alkylene oxide groups. By way of example, mention may be made of: allyl alcohol, isoprenol, methoxypolyethylene glycol (meth)acrylate, methoxypolypropylene glycol (meth)acrylate, methoxypolybutylene glycol (meth)acrylate, methoxypoly(propylene oxide-co-ethylene oxide) (meth)acrylate, ethoxypolyethylene glycol (meth)acrylate, ethoxypolypropylene glycol (meth)acrylate, ethoxypolybutylene glycol (meth)acrylate and ethoxypoly(propylene oxide-co-ethylene oxide) (meth)acrylate. Polyalkylene glycols here can comprise 3 to 50, in particular 5 to 40 and especially 10 to 30 alkylene oxide units per molecule.

Particularly preferred sulfonic-acid-group-containing monomers here are 1-acrylamido-1-propanesulfonic acid, 2-acrylamido-2-propanesulfonic acid, 2-acrylamido-2-methylpropanesulfonic acid, 2-methacrylamido-2-methylpropanesulfonic acid, 3-methacrylamido-2-hydroxypropanesulfonic acid, allylsulfonic acid, methallylsulfonic acid, allyloxybenzenesulfonic acid, methallyloxybenzenesulfonic acid, 2-hydroxy-3-(2-propenyloxy)propanesulfonic acid, 2-methyl-2-propene-1-sulfonic acid, styrenesulfonic acid, vinylsulfonic acid, 3-sulfopropyl acrylate, 2-sulfoethyl methacrylate, 3-sulfopropyl methacrylate, sulfomethacrylamide, sulfomethylmethacrylamide, and salts of said acids, such as sodium, potassium or ammonium salts thereof.

Particularly preferred phosphonate-group-containing monomers are vinylphosphonic acid and its salts.

Moreover, amphoteric polymers can also be used as builders.

Compositions according to the invention can comprise, for example, in the range from in total 0.1 to 70 % by weight, preferably 10 to 50% by weight, preferably up to 20% by weight, of builder(s), especially in the case of solid formulations. Liquid formulations according to the invention preferably comprise in the range of from 0.1 to 8 % by weight of builder.

Formulations according to the invention can comprise one or more **alkali carriers**. Alkali carriers ensure, for example, a pH of at least 9 if an alkaline pH is desired. Of suitability are, for example, the alkali metal carbonates, the alkali metal hydrogen carbonates, and alkali metal metasilicates mentioned above, and, additionally, alkali metal hydroxides. A preferred alkali metal is in each case potassium, particular preference being given to sodium. In one embodiment of the present invention, a pH >7 is adjusted by using amines, preferably alkanolamines, more preferably triethanolamine.

In one embodiment of the present invention, the laundry formulation according to the invention comprises additionally at least one **enzyme.**

Useful enzymes are, for example, one or more hydrolases selected from lipases, amylases, proteases, cellulases, hemicellulases, phospholipases, esterases, pectinases, lactases and peroxidases, and combinations of at least two of the foregoing types.

Such enzyme(s) can be incorporated at levels sufficient to provide an effective amount for cleaning. The preferred amount is in the range from 0.001% to 5 % of active enzyme by weight in the detergent composition according to the invention. Together with enzymes also enzyme stabilizing systems may be used such as for example calcium ions, boric acid, boronic acid, propylene glycol and short chain carboxylic acids. In the context of the present invention, short chain carboxylic acids are selected from monocarboxylic acids with 1 to 3 carbon atoms per molecule and from dicarboxylic acids with 2 to 6 carbon atoms per molecule. Preferred examples are formic acid, acetic acid, propionic acid, oxalic acid, succinic acid, HOOC(CH₂)₃COOH, adipic acid and mixtures from at least two of the foregoing, as well as the respective sodium and potassium salts.

In one embodiment of the present invention, the laundry formulations comprise lipases and the polymers as described above are used in combination with lipases to obtain even further improvement of oily/fatty stain removal.

In another embodiment of the present invention, the inventive laundry formulations do not comprise lipases.

Compositions according to the invention may comprise one or more **bleaching agent** (bleaches). Preferred bleaches are selected from sodium perborate, anhydrous or, for example, as the monohydrate or as the tetrahydrate or so-called dihydrate, sodium percarbonate, anhydrous or, for example, as the monohydrate, and sodium persulfate, where the term "persulfate" in each case includes the salt of the peracid H₂SO₅ and also the peroxodisulfate.

In this connection, the alkali metal salts can in each case also be alkali metal hydrogen carbonate, alkali metal hydrogen perborate and alkali metal hydrogen persulfate. However, the dialkali metal salts are preferred in each case.

Formulations according to the invention can comprise one or more **bleach catalysts**. Bleach catalysts can be selected from oxaziridinium-based bleach catalysts, bleach-boosting transition metal salts or transition metal complexes such as, for example, manganese-, iron-, cobalt-, ruthenium- or molybdenum-salen complexes or carbonyl complexes. Manganese, iron, cobalt, ruthenium, molybdenum, titanium, vanadium and copper complexes with nitrogen-containing tripod ligands and also cobalt-, iron-, copper- and ruthenium-amine complexes can also be used as bleach catalysts.

Formulations according to the invention can comprise one or more **bleach activators**, for example tetraacetyl ethylene diamine, tetraacetylmethylene diamine, tetraacetylglycoluril, tetraacetylhexylene diamine, acylated phenolsulfonates such as for example n-nonanoyl- or isononanoyloxybenzene sulfonates, N-methylmorpholinium-acetonitrile salts ("MMA salts"), trimethylammonium acetonitrile salts, N-acylimides such as, for example, N-nonanoylsuccinimide, 1,5-diacetyl-2,2-dioxohexahydro-1,3,5-triazine ("DADHT") or nitrile quats (trimethylammonium acetonitrile salts).

Formulations according to the invention can comprise one or more **corrosion inhibitors**. In the present case, this is to be understood as including those compounds which inhibit the corrosion of metal. Examples of suitable corrosion inhibitors are triazoles, in particular benzotriazoles, bisbenzotriazoles, aminotriazoles, alkylaminotriazoles, also phenol derivatives such as, for example, hydroquinone, pyrocatechol, hydroxyhydroquinone, gallic acid, phloroglucinol or pyrogallol.

In one embodiment of the present invention, formulations according to the invention comprise in total in the range from 0.1 to 1.5% by weight of corrosion inhibitor.

Formulations according to the invention may also comprise further **cleaning polymers** and/or **soil release polymers.**

The additional cleaning polymers may include, without limitation, multifunctional polyethylene imines (for example BASF's Sokalan^{®} HP20) and/or multifunctional diamines (for example BASF's Sokalan^{®} HP96).

Multifunctional polyethylene imines according to the present invention are typically ethoxylated polyethylene imines with a weight-average molecular weight M_{w} in the range from 3000 to 250000, preferably 5000 to 200000, more preferably 8000 to 100000, more preferably 8000 to 50000, more preferably 10000 to 30000, and most preferably 10000 to 20000 g/mol. The multifunctional polyethylene imines have 80 wt.% to 99 wt.%, preferably 85 wt.% to 99 wt.%, more preferably 90 wt.% to 98 wt.%, most preferably 93 wt.% to 97 wt.% or 94 wt.% to 96 wt.% ethylene oxide side chains, based on the total weight of the materials. Ethoxylated polyethylene imines are based on a polyethylene imine core and a polyethylene oxide shell. Suitable polyethylene imine core molecules are polyethylene imines with a weight-average molecular weight M_{w} in the range of 500 to 5000 g/mol. Preferred is a molecular weight from 500 to 1000 g/mol, even more preferred is a M_{w} of 600 to 800 g/mol. The ethoxylated polymer then has on average 5 to 50, preferably 10 to 35 and even more preferably 20 to 35 ethylene oxide (EO) units per NH-functional group.

Multifunctional diamines as described above are typically ethoxylated C2 to C12 alkylene diamines, preferably hexamethylene diamine, which are further quaternized and optionally sulfated. The multifunctional diamines have a weight-average molecular weight M_{w} in the range from 2000 to 10000, more preferably 3000 to 8000, and most preferably 4000 to 6000 g/mol. In a preferred embodiment of the invention, ethoxylated hexamethylene diamine, furthermore quaternized and sulfated, may be employed, which contains on average 10 to 50, preferably 15 to 40 and even more preferably 20 to 30 ethylene oxide (EO) groups per NH-functional group, and which preferably bears two cationic ammonium groups and two anionic sulfate groups.

In a preferred embodiment of the present invention, either multifunctional polyethylene imines or multifunctional diamines according to the descriptions above may be employed to improve the stain removal ability, especially the primary detergency of particulate stains on polyester fabrics of laundry detergents.

In another embodiment of the present invention, mixtures of multifunctional polyethylene imines and multifunctional diamines according to the descriptions above may be employed to improve the stain-removal ability, especially the primary detergency of particulate stains on polyester fabrics of laundry detergents.

The multifunctional polyethylene imines or multifunctional diamines or mixtures thereof according to the descriptions above may be added to the laundry detergents and cleaning compositions in amounts of generally from 0.05 to 15 wt.%, preferably from 0.1 to 10 wt.% and more preferably from 0.25 to 5 wt.%, based on the particular overall composition, including other components and water and/or solvents.

Thus, one aspect of the present invention is a laundry detergent composition, in particular a liquid laundry detergent, comprising (i) at least one polymer as described above and (ii) at least one
polymer selected from multifunctional polyethylene imines or multifunctional diamines or mixtures thereof.

In one embodiment of the present invention, the ratio of the at least one inventive-polymer as described above and (ii) the at least one polymer selected from multifunctional polyethylene imines or multifunctional diamines or mixtures thereof, is from 10:1 to 1:10, preferably from 5:1 to 1:5 and more preferably from 3:1 to 1:3.

Laundry formulations comprising the polymer described above may also comprise at least one **antimicrobial agent.**

Antimicrobial agents may be selected from the list consisting of 2-phenoxyethanol (CAS-no. 122-99-6.) and 4,4'-dichloro-2-hydroxydiphenylether (CAS: 3380-30-1), and combinations thereof. The 4,4'-dichloro-2-hydroxydiphenylether may be used as a solution, for example a solution of 30 wt.% of 4,4'-dichloro-2-hydroxydiphenylether in 1,2-propyleneglycol..

The inventive laundry formulation may comprise at least one antimicrobial agent from the above list and/or a combination thereof, and/or a combination with at least one further antimicrobial agent not listed here.

The antimicrobial agent may be added to the inventive laundry formulation in a concentration of 0.0001 wt.% to 10 wt.% relative to the total weight of the composition.

Preferably, the formulation contains 2-phenoxyethanol in a concentration of 0.01 wt.% to 5 wt.%, more preferably 0.1 wt.% to 2 wt.% and/or 4,4'-dichloro 2-hydroxydiphenyl ether in a concentration of 0.001 wt.% to 1 wt.%, more preferably 0.002 wt.% to 0.6 wt.% (in all cases relative to the total weight of the composition).

Formulations according to the invention may comprise at least one **additional surfactant**, selected from **non-ionic and amphoteric surfactants** and from **zwitterionic surfactants**:

### Non-ionic and amphoteric surfactants

Examples of (additional) surfactants are in particular non-ionic surfactants. Preferred non-ionic surfactants are alkoxylated alcohols and alkoxylated fatty alcohols, di- and multiblock copolymers of ethylene oxide and propylene oxide and reaction products of sorbitan with ethylene oxide or propylene oxide, furthermore alkylphenol ethoxylates, alkyl glycosides, polyhydroxy fatty acid amides (glucamides). Examples of (additional) amphoteric surfactants are so-called amine oxides.

Preferred examples of alkoxylated alcohols and alkoxylated fatty alcohols are, for example, compounds of the general formula (I) 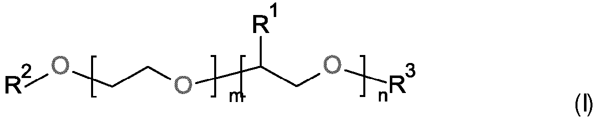 in which the variables are defined as follows:
R¹ is selected from linear C₁-C₁₀-alkyl, preferably ethyl and particularly preferably methyl,
R² is selected from C₈-C₂₂-alkyl, for example n-C₈H₁₇, n-C₁₀H₂₁, n-C₁₂H₂₅, n-C₁₄H₂₉, n-C₁₆H₃₃ or n-C₁₈H₃₇,
R³ is selected from C₁-C₁₀-alkyl, methyl, ethyl, n-propyl, isopropyl, n-butyl, isobutyl, sec-butyl, tert-butyl, n-pentyl, isopentyl, sec-pentyl, neopentyl, 1,2-dimethylpropyl, isoamyl, n-hexyl, isohexyl, sec-hexyl, n-heptyl, n-octyl, 2-ethylhexyl, n-nonyl, n-decyl or isodecyl,
m and n are in the range from zero to 300, where the sum of n and m is at least one. Preferably, m is in the range from 1 to 100 and n is in the range from 0 to 30.

Here, compounds of the general formula (I) may be block copolymers or random copolymers, preference being given to block copolymers.

Other preferred examples of alkoxylated alcohols and alkoxylated fatty alcohols are, for example, compounds of the general formula (II) 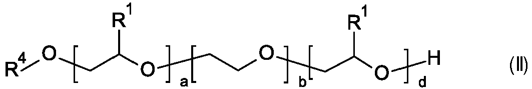 in which the variables are defined as follows:
R¹ is identical or different and selected from linear C₁-C₄-alkyl, preferably identical in each case and ethyl and particularly preferably methyl,
R⁴ is selected from C₆-C₂₀-alkyl, in particular n-C₈H₁₇, n-C₁₀H₂₁, n-C₁₂H₂₅, n-C₁₄H₂₉, n-C₁₆H₃₃, n-C₁₈H₃₇,
a is a number in the range from zero to 6, preferably 1 to 6,
b is a number in the range from zero to 20, preferably 4 to 20,
d is a number in the range from 4 to 25.

Preferably, at least one of a and b is greater than zero.

Here, compounds of the general formula (II) may be block copolymers or random copolymers, preference being given to block copolymers.

Further suitable non-ionic surfactants are selected from di- and multiblock copolymers, composed of ethylene oxide and propylene oxide. Further suitable non-ionic surfactants are selected from ethoxylated or propoxylated sorbitan esters. Alkylphenol ethoxylates or alkyl polyglycosides or polyhydroxy fatty acid amides (glucamides) are likewise suitable. An overview of suitable further non-ionic surfactants can be found in EP-A 0 851 023 and in DE-A 198 19 187. Mixtures of two or more different non-ionic surfactants may also be present.

Suitable amphoteric surfactants are so-called amine oxides, such as lauryl dimethyl amine oxide ("lauramine oxide").

### Zwitterionic surfactants

Examples of zwitterionic surfactants are C₁₂-C₁₈-alkylbetaines and sulfobetaines.

Formulations according to the invention may also comprise water and additional organic **solvents**, e.g. ethanol or propylene glycol.

Further **optional ingredients** may be but are not limited to viscosity modifiers, cationic surfactants, foam boosting or foam reducing agents, perfumes, dyes, optical brighteners, and dye transfer inhibiting agents.

### (b) Manual dish wash detergents

Another aspect of the present invention is also a manual dish wash detergent formulation, comprising at least one polymer as described above.

Thus, an aspect of the present invention is also the use of the inventive-polymer as described above, in manual dish wash applications.

Manual dish wash detergents according to the invention can be in the form of a liquid, semiliquid, cream, lotion, gel, or solid composition, solid embodiments encompassing, for example, powders and tablets. Liquid compositions are preferred. The detergents are intended for use in liquid form for direct or indirect application onto dishware.

In one embodiment of the present invention, the polymer as described above is one component of a manual dish wash formulation that additionally comprises at least one surfactant, preferably at least one anionic surfactant.

Preferably the composition is formulated to provide superior grease cleaning (degreasing) properties, long-lasting suds and improved viscosity control at decreased temperature exposures. Optional further benefits include soil removal, shine, and hand care.

Examples of suitable **anionic surfactants** are alkali metal and ammonium salts of C₈-C₁₂-alkyl sulfates, of C₁₂-C₁₈-fatty alcohol ether sulfates, of C₁₂-C₁₈-fatty alcohol polyether sulfates, of sulfuric acid half-esters of ethoxylated C₄-C₁₂-alkylphenols (ethoxylation: 3 to 50 mol of ethylene oxide/mol), of C₁₂-C₁₈-alkylsulfonic acids, of C₁₂-C₁₈ sulfo fatty acid alkyl esters, for example of C₁₂-C₁₈ sulfo fatty acid methyl esters, of C₁₀-C₁₈-alkylarylsulfonic acids, preferably of n-C₁₀-C₁₈-alkylbenzene sulfonic acids, of C₁₀-C₁₈ alkyl alkoxy carboxylates and of soaps such as for example C₈-C₂₄-carboxylic acids. Preference is given to the alkali metal salts of the aforementioned compounds, particularly preferably the sodium salts.

In one embodiment of the present invention, anionic surfactants are selected from n-C₁₀-C₁₈-alkylbenzene sulfonic acids and from fatty alcohol polyether sulfates, which, within the context of the present invention, are in particular sulfuric acid half-esters of ethoxylated C₁₂-C₁₈-alkanols (ethoxylation: 1 to 50 mol of ethylene oxide/mol), preferably of n-C₁₂-C₁₈-alkanols.

In one embodiment of the present invention, also alcohol polyether sulfates derived from branched (i.e. synthetic) C₁₁-C₁₈-alkanols (ethoxylation: 1 to 50 mol of ethylene oxide/mol) may be employed.

Preferably, the alkoxylation group of both types of alkoxylated alkyl sulfates, based on C₁₂-C₁₈-fatty alcohols or based on branched (i.e. synthetic) C₁₁-C₁₈-alcohols, is an ethoxylation group and an average ethoxylation degree of any of the alkoxylated alkyl sulfates is 1 to 5, preferably 1 to 3.

Preferably, the manual dish wash detergent formulation of the present invention comprises from at least 1 wt.% to 50 wt.%, preferably in the range from greater than or equal to about 3 wt.% to equal to or less than about 35 wt.%, more preferably in the range from greater than or equal to 5 wt.% to less than or equal to 30 wt.%, and most preferably in the range from greater than or equal to 5 wt.% to less than or equal to 20 wt.% of one or more anionic surfactants as described above, based on the particular overall composition, including other components and water and/or solvents.

Compositions according to the invention may comprise at least one **amphoteric surfactant.** Examples of amphoteric surfactants are amine oxides. Preferred amine oxides are alkyl dimethyl amine oxides or alkyl amido propyl dimethyl amine oxides, more preferably alkyl dimethyl amine oxides and especially coco dimethyl amino oxides. Amine oxides may have a linear or mid-branched alkyl moiety. Typical linear amine oxides include water-soluble amine oxides containing one R1 = C8-18 alkyl moiety and two R2 and R3 moieties selected from the group consisting of C₁-C₃ alkyl groups and C₁-C₃ hydroxyalkyl groups. Preferably, the amine oxide is characterized by the formula

R¹-N(R²)(R³)-O

wherein R¹ is a C₈-₁₈ alkyl and R² and R³ are selected from the group consisting of methyl, ethyl, propyl, isopropyl, 2-hydroxethyl, 2-hydroxypropyl and 3-hydroxypropyl. The linear amine oxide surfactants in particular may include linear C₁₀-C₁₈ alkyl dimethyl amine oxides and linear C₈-C₁₂ alkoxy ethyl dihydroxy ethyl amine oxides. Preferred amine oxides include linear C₁₀, linear C₁₀-C₁₂, and linear C₁₂-C₁₄ alkyl dimethyl amine oxides. As used herein, "mid-branched" means that the amine oxide has one alkyl moiety having n1 carbon atoms with one alkyl branch on the alkyl moiety having n2 carbon atoms. The alkyl branch is located on the alpha carbon from the nitrogen on the alkyl moiety. This type of branching for the amine oxide is also known in the art as an internal amine oxide. The total sum of n1 and n2 is from 10 to 24 carbon atoms, preferably from 12 to 20, and more preferably from 10 to 16. The number of carbon atoms for the one alkyl moiety (n1) should be approximately the same number of carbon atoms as the one alkyl branch (n2) such that the one alkyl moiety and the one alkyl branch are symmetric. As used herein "symmetric" means that (n1-n2) is less than or equal to 5, preferably 4, most preferably from 0 to 4 carbon atoms in at least 50 wt.%, more preferably at least 75 wt.% to 100 wt.% of mid-branched amine oxides for use herein. The amine oxide further comprises two moieties, independently selected from a C₁-C₃ alkyl, a C₁-C₃ hydroxyalkyl group, or a polyethylene oxide group containing an average of from about 1 to about 3 ethylene oxide groups. Preferably the two moieties are selected from a C₁-C₃ alkyl, more preferably both are methyl.

The manual dish wash detergent composition of the invention preferably comprises from 1 wt.% to 15 wt.%, preferably from 2 wt.% to 12 wt.%, more preferably from 3 wt.% to 10 wt.% of the composition of an amphoteric surfactant, preferably an amine oxide surfactant. Preferably the composition of the invention comprises a mixture of the anionic surfactants and alkyl dimethyl amine oxides in a weight ratio of less than about 10:1, more preferably less than about 8:1, more preferably from about 5:1 to about 2:1.

Addition of the amphoteric surfactant provides good foaming properties in the detergent composition.

Compositions according to the invention may comprise at least one **zwitterionic surfactant.** Suitable zwitterionic surfactants include betaines, such as alkyl betaines, alkylamidobetaine, amidazoliniumbetaine, sulfobetaine (INCI Sultaines) as well as the phosphobetaines. Examples of suitable betaines and sulfobetaines are the following (designated in accordance with INCI): Almondamidopropyl of betaines, Apricotam idopropyl betaines, Avocadamidopropyl of betaines, Babassuamidopropyl of betaines, Behenam idopropyl betaines, Behenyl of betaines, Canolam idopropyl betaines, Capryl/Capram idopropyl betaines, Carnitine, Cetyl of betaines, Cocamidoethyl of betaines, Cocam idopropyl betaines, Cocam idopropyl Hydroxysultaine, Coco betaines, Coco Hydroxysultaine, Coco/Oleam idopropyl betaines, Coco Sultaine, Decyl of betaines, Dihydroxyethyl Oleyl Glycinate, Dihydroxyethyl Soy Glycinate, Dihydroxyethyl Stearyl Glycinate, Dihydroxyethyl Tallow Glycinate, Dimethicone Propyl of PG-betaines, Erucam idopropyl Hydroxysultaine, Hydrogenated Tallow of betaines, Isostearam idopropyl betaines, Lauram idopropyl betaines, Lauryl of betaines, Lauryl Hydroxysultaine, Lauryl Sultaine, Milkam idopropyl betaines, Minkamidopropyl of betaines, Myristam idopropyl betaines, Myristyl of betaines, Oleam idopropyl betaines, Oleam idopropyl Hydroxysultaine, Oleyl of betaines, Olivamidopropyl of betaines, Palmam idopropyl betaines, Palm itam idopropyl betaines, Palmitoyl Carnitine, Palm Kernelam idopropyl betaines, Polytetrafluoroethylene Acetoxypropyl of betaines, Ricinoleam idopropyl betaines, Sesam idopropyl betaines, Soyam idopropyl betaines, Stearam idopropyl betaines, Stearyl of betaines, Tallowam idopropyl betaines, Tallowam idopropyl Hydroxysultaine, Tallow of betaines, Tallow Dihydroxyethyl of betaines, Undecylenam idopropyl betaines and Wheat Germam idopropyl betaines.

A preferred betaine is, for example, Cocoamidopropylbetaine. The zwitterionic surfactant preferably is a betaine surfactant, more preferable a Cocoamidopropylbetaine surfactant.

The manual dish wash detergent composition of the invention optionally comprises from 1 wt.% to 15 wt.%, preferably from 2 wt.% to 12 wt.%, more preferably from 3 wt.% to 10 wt.% of the composition of a zwitterionic surfactant, preferably a betaine surfactant.

In a preferred embodiment of the present invention, the manual dish wash formulations contain at least one amphoteric surfactant, preferably an amine oxide, or at least one zwitterionic surfactant, preferably a betaine, or mixtures thereof, to aid in the foaming, detergency, and/or mildness of the detergent composition.

Compositions according to the invention may comprise at least one **cationic surfactant.** Examples of cationic surfactants are quaternary ammonium surfactants, preferably selected from mono C6-C16, more preferably C6-C10 N-alkyl or alkenyl ammonium surfactants, wherein the remaining N positions are substituted by methyl, hydroxyethyl or hydroxypropyl groups. Another preferred cationic surfactant is a C6-18 alkyl or alkenyl ester of a quaternary ammonium alcohol, such as quaternary chlorine esters.

Cationic surfactants, when present in the composition, are present in an effective amount, more preferably from 0.1 wt.% to 5 wt.%, preferably 0.2 wt.% to 2 w.t% of the composition.

Compositions according to the invention may comprise at least one **non-ionic surfactant**. Preferred non-ionic surfactants are alkoxylated alcohols and alkoxylated fatty alcohols, di- and multiblock copolymers of ethylene oxide and propylene oxide and reaction products of sorbitan with ethylene oxide or propylene oxide, furthermore alkylphenol ethoxylates, alkyl glycosides and polyhydroxy fatty acid amides (glucamides).

Preferred examples of alkoxylated alcohols and alkoxylated fatty alcohols are, for example, compounds of the general formula (I) 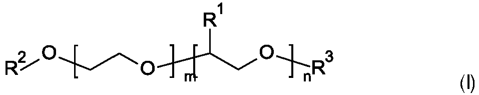 in which the variables are defined as follows:
R¹ is selected from linear C₁-C₁₀-alkyl, preferably ethyl and particularly preferably methyl,
R² is selected from C₈-C₂₂-alkyl, for example n-C₈H₁₇, n-C₁₀H₂₁, n-C₁₂H₂₅, n-C₁₄H₂₉, n-C₁₆H₃₃ or n-C₁₈H₃₇,
R³ is selected from C₁-C₁₀-alkyl, methyl, ethyl, n-propyl, isopropyl, n-butyl, isobutyl, sec-butyl, tert-butyl, n-pentyl, isopentyl, sec-pentyl, neopentyl, 1,2-dimethylpropyl, isoamyl, n-hexyl, isohexyl, sec-hexyl, n-heptyl, n-octyl, 2-ethylhexyl, n-nonyl, n-decyl or isodecyl,
m and n are in the range from zero to 300, where the sum of n and m is at least one. Preferably,
m is in the range from 1 to 100 and n is in the range from 0 to 30.

Here, compounds of the general formula (I) may be block copolymers or random copolymers, preference being given to block copolymers.

Other preferred examples of alkoxylated alcohols and alkoxylated fatty alcohols are, for example, compounds of the general formula (II) 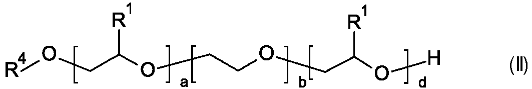 in which the variables are defined as follows:
R¹ is identical or different and selected from linear C₁-C₄-alkyl, preferably identical in each case and ethyl and particularly preferably methyl,
R⁴ is selected from C₆-C₂₀-alkyl, in particular n-C₈H₁₇, n-C₁₀H₂₁, n-C₁₂H₂₅, n-C₁₄H₂₉, n-C₁₈H₃₃, n-C₁₈H₃₇,
a is a number in the range from zero to 6, preferably 1 to 6,
b is a number in the range from zero to 20, preferably 4 to 20,
d is a number in the range from 4 to 25.

Preferably, at least one of a and b is greater than zero.

Here, compounds of the general formula (II) may be block copolymers or random copolymers, preference being given to block copolymers.

Further suitable non-ionic surfactants are selected from di- and multiblock copolymers, composed of ethylene oxide and propylene oxide. Further suitable non-ionic surfactants are selected from ethoxylated or propoxylated sorbitan esters. Alkylphenol ethoxylates or alkyl polyglycosides or polyhydroxy fatty acid amides (glucamides) are likewise suitable. An overview of suitable further non-ionic surfactants can be found in EP-A 0 851 023 and in DE-A 198 19 187. Mixtures of two or more different non-ionic surfactants may also be present.

Highly preferred non-ionic surfactants are the condensation products of Guerbet alcohols with from 2 to 18 moles, preferably 2 to 15, more preferably 5-12 of ethylene oxide per mole of alcohol. Other preferred non-ionic surfactants for use herein include fatty alcohol polyglycol ethers, alkylpolyglucosides and fatty acid glucamides.

The manual hand dish detergent composition of the present invention may comprise from 0.1 wt.% to 10 wt.%, preferably from 0.3 wt.% to 5 wt.%, more preferably from 0.4 wt.% to 2 wt.% of the composition, of a linear or branched alkoxylated non-ionic C₁₀-alkyl surfactant having an average degree of alkoxylation of from 2 to 6, preferably from 3 to 5. Preferably, the linear or branched C10 alkoxylated non-ionic surfactant is a branched C₁₀-alkyl ethoxylated non-ionic surfactant having an average degree of ethoxylation of from 2 to 6, preferably of from 3 to 5. Preferably, the composition comprises from 60 wt.% to 100 wt.%, preferably from 80 wt.% to 100 wt.%, more preferably 100 wt.% of the total linear or branched C10 alkoxylated non-ionic surfactant of the branched C10 ethoxylated non-ionic surfactant. The linear or branched C10 alkoxylated non-ionic surfactant preferably is a 2-propylheptyl ethoxylated non-ionic surfactant having an average degree of ethoxylation of from 3 to 5. The use of a 2-propylheptyl ethoxylated non-ionic surfactant having an average degree of ethoxylation of from 3 to 5 leads to improved foam levels and long-lasting suds.

Thus, one aspect of the present invention is a manual dish wash detergent composition, in particular a liquid manual dish wash detergent composition, comprising (i) at least one polymer as described above, and (ii) at least one further 2-propylheptyl ethoxylated non-ionic surfactant having an average degree of ethoxylation of from 3 to 5.

Compositions according to the invention may comprise at least one **hydrotrope** in an effective amount, to ensure the compatibility of the liquid manual dish wash detergent compositions with water.

Suitable hydrotropes for use herein include anionic hydrotropes, particularly sodium, potassium, and ammonium xylene sulfonate, sodium, potassium and ammonium toluene sulfonate, sodium, potassium, and ammonium cumene sulfonate, and mixtures thereof, and related compounds, as disclosed in U.S. Patent 3,915,903.

The liquid manual dish wash detergent compositions of the present invention typically comprise from 0.1 wt.% to 15 wt.% of the total liquid detergent composition of a hydrotrope, or mixtures thereof, preferably from 1 wt.% to 10 wt.%, most preferably from 2 wt.% to 5 wt.% of the total liquid manual dish wash composition.

Compositions according to the invention may comprise at least one **organic solvent.** Examples of organic solvents are C4-C14 ethers and diethers, glycols, alkoxylated glycols, C6-C16 glycol ethers, alkoxylated aromatic alcohols, aromatic alcohols, aliphatic branched alcohols, alkoxylated aliphatic branched alcohols, alkoxylated linear C1-C5 alcohols, linear C1-C5 alcohols, amines, C8-C14 alkyl and cycloalkyl hydrocarbons and halohydrocarbons, and mixtures thereof.

When present, the liquid detergent compositions will contain from 0.01 wt.% to 20 wt.%, preferably from 0.5 wt.% to 15 wt.%, more preferably from 1 wt.% to 10 wt.%, even more preferably from 1 wt.% to 5 wt.% of the liquid detergent composition of a solvent. These solvents may be used in conjunction with an aqueous liquid carrier, such as water, or they may be used without any aqueous liquid carrier being present. At higher solvent systems, the absolute values of the viscosity may drop but there is a local maximum point in the viscosity profile.

The compositions herein may further comprise from 30 wt% to 90 wt.% of an aqueous liquid carrier, comprising water, in which the other essential and optional ingredients are dissolved, dispersed or suspended. More preferably the compositions of the present invention comprise from 45 wt.% to 85 wt.%, even more preferably from 60 wt.% to 80 wt.% of the aqueous liquid carrier. The aqueous liquid carrier, however, may contain other materials which are liquid, or which dissolve in the liquid carrier, at ambient temperature (25 °C) and which may also serve some other function besides that of an inert filler.

Compositions according to the invention may comprise at least one **electrolyte.**

Suitable electrolytes are preferably selected from inorganic salts, even more preferably selected from monovalent salts, most preferably sodium chloride.

The liquid manual dish wash compositions according to the invention may comprise from 0.1 wt.% to 5 wt.%, preferably from 0.2 wt.% to 2 wt.% of the composition of an electrolyte.

Manual dish wash formulations comprising the polymer as described above may also comprise at least one **antimicrobial agent.**

The antimicrobial agent may be selected from the list consisting of 2-phenoxyethanol (CAS-no. 122-99-6.) and 4,4'-dichloro-2-hydroxydiphenylether (CAS: 3380-30-1), and combinations thereof.

The 4,4'-dichloro-2-hydroxydiphenylether may be used as a solution, for example a solution of 30 wt.% of 4,4'-dichloro-2-hydroxydiphenylether in 1,2-propyleneglycol, e. g. Tinosan^{®} HP 100 available from BASF.

The inventive hand dish wash formulation may comprise at least one antimicrobial agent from the above list and/or a combination thereof, and/or a combination with at least one further antimicrobial agent not listed here.

The antimicrobial agent may be added to the inventive hand dish wash formulation in a concentration of 0.0001 wt.% to 10 wt.% relative to the total weight of composition. Preferably, the formulation contains 2-phenoxyethanol in a concentration of 0.01 wt.% to 5 wt.%, more preferably 0.1 wt.% to 2 wt.% and/or 4,4'-dichloro 2-hydroxydiphenyl ether in a concentration of 0.001 wt.% to 1 wt.%, more preferably 0.002 wt.% to 0.6 wt.% (in all cases relative to the total weight of the composition).

Compositions according to the invention may comprise at least one **additional ingredient.** Examples of additional ingredients are such as but not limited to conditioning polymers, cleaning polymers, surface modifying polymers, soil flocculating polymers, rheology modifying polymers, enzymes, structurants, builders, chelating agents, cyclic diamines, structurants, emollients, humectants, skin rejuvenating actives, carboxylic acids, scrubbing particles, bleach and bleach activators, perfumes, malodor control agents, pigments, dyes, opacifiers, beads, pearlescent particles, microcapsules, antibacterial agents, pH adjusters including NaOH and alkanolamines such as monoethanolamines, buffering means, and divalent salts including divalent salts comprising magnesium and calcium cations.

The liquid manual dish wash detergent composition may have any suitable pH-value. Preferably the pH of the composition is adjusted to between 4 and 14. More preferably the composition has a pH of from 6 to 13, even more preferably from 6 to 10, most preferably from 7 to 9. The pH of the composition can be adjusted using pH modifying ingredients known in the art and is measured as a 10 wt.% product concentration in demineralised water at 25 °C. For example, NaOH may be used and the actual wt.% of NaOH may be varied and trimmed up to the desired pH such as pH 8.0. In one embodiment of the present invention, a pH >7 is adjusted by using amines, preferably alkanolamines, more preferably triethanolamine.

The compositions of the present invention preferably have a viscosity of from 50 to 4000 mPa*s, more preferably from 100 to 2000 mPa*s, and most preferably from 500 to 1500 mPa*s at 20 1/s and 20 °C.

Compositions according to the invention can be used for washing dishware. Said method of washing dishes comprises the step of applying the composition, preferably in liquid form, onto the dishware surface, either directly or by means of a cleaning implement, i.e., in neat form. The composition is applied directly onto the surface to be treated and/or onto a cleaning device or implement such as a dish cloth, a sponge or a dish brush without undergoing major dilution (immediately) prior to the application. The cleaning device or implement is preferably wet before or after the composition is delivered to it. In the according method, the composition can also be applied in diluted form.

Both neat and dilute application give rise to superior cleaning performance, i.e. the formulations of the invention containing the polymer as described above exhibit excellent degreasing properties. The effort of removing fat and/or oily soils from the dishware is decreased due to the presence of the polymer as described above, even when the level of surfactant used is lower than in conventional compositions.

In a preferred embodiment the polymer as described above is used in a laundry detergent. Liquid laundry detergents according to the present invention are composed of:
0,05 - 20 % of at least one inventive-polymer as described above
1 - 50% of surfactants
0,1 - 40 % of builders, cobuilders and/or chelating agents
0,1 - 50 % other adjuncts
water to add up 100 %.

Preferred liquid laundry detergents according to the present invention are composed of:
0,2 - 6 % of at least one polymer as described above
5 - 40 % of anionic surfactants selected from C₁₀-C₁₅- LAS and C₁₀-C₁₈ alkyl ethersulfate containing 1-5 ethylenoxy-units
1,5 - 10 % of nonioic surfactants selected from C₁₀-C₁₈-alkyl ethoxylates containing 3 - 10 ethylenoxy-units
2 - 20 % of soluble organic builders/ cobuilders selected from C₁₀-C₁₈ fatty acids, di- and tricarboxylic acids, hydroxy-di- and hydroxytricaboxylic acids and polycarboxylic acids
0,05 - 5 % of an enzyme system containing at least one enzyme suitable for detergent use and preferably also an enzyme stabilizing system
0.5 - 20 % of mono- or diols selected from ethanol, isopropanol, ethylene glycol, or propylene glycol
0.1 - 20 % other adjuncts
water to add up to 100%

Solid laundry detergents (like e.g. powders, granules or tablets) according to the present invention are composed of:
0,05 - 20 % of at least one polymer as described above
1 - 50% of surfactants
0,1 - 80 % of builders, cobuilders and/or chelating agents
0-50% fillers
0 - 40% bleach actives
0.1 - 30 % other adjuncts and/or water
wherein the sum of the ingredients adds up 100 %.

Preferred solid laundry detergents according to the present invention are composed of:
0,2 - 6 % of at least one polymer as described above
5 - 30 % of anionic surfactants selected from C₁₀-C₁₅- LAS, C₁₀-C₁₈ alkylsulfates and C₁₀-C₁₈ alkyl ethersulfate containing 1-5 ethylenoxy-units
1.5 - 7.5 % of nonionic surfactants selected from C10-C18-alkyl ethoxylates containing 3 - 10 ethylenoxy-units
5 - 50 % of inorganic builders selected from sodium carbonate, sodiumbicarbonate, zeolites, soluble silicates, sodium sulfate
0.5 - 15 % of cobuilders selected from C₁₀-C₁₈ fatty acids, di- and tricarboxylic acids, hydroxydi- and hydroxytricarboxylic acids and polycarboxylic acids
0.1 - 5 % of an enzyme system containing at least one enzyme suitable for detergent use and preferably also an enzyme stabilizing system
0.5 - 20 % of mono- or diols selected from ethanol, isopropanol, ethylene glycol, or propylene glycol
0.1 - 20 % other adjuncts
water to add up to 100%

**Table 1: General formula for detergent compositions according to the invention:**

| Ingredient | Ranges of Ingredient in Liquid frame formulations |
|---|---|
| Linear alkyl benzene sulphonic acid | 0 to 30 % |
| Coco fatty acid | 1 to 12 % |
| Fatty alcohol ether sulphate | 0 to 25 % |
| NaOH or mono or triethanol amine | Up to pH 7.5 to 9.0 |
| Alcohol ethoxylate | 3 to 10 % |
| 1,2-Propylene glycol | 1 to 10 % |
| Ethanol | 0 to 4 % |
| Sodium citrate | 0 to 8 % |
| water | Up to 100 % |

The at least one polymer as described above may be added to such formulation(s) in suitable amounts as outlined herein.

**Table 2: Liquid frame formulations according to the invention:**

| **active** | | | | | | |
|---|---|---|---|---|---|---|
| **(numbers: % active)** | **F1** | **F2** | **F3** | **F4** | **F5** | **F6** |
| alcohol ethoxylate 7EO | 5.40 | 10.80 | 12.40 | 7.30 | 1.60 | 7.60 |
| Coco fatty acid K12-18 | 2.40 | 3.10 | 3.20 | 3.20 | 3.50 | 6.40 |
| Fatty alcohol ether sulphate | 5.40 | 8.80 | 7.10 | 7.10 | 5.40 | 14.00 |
| Linear alkyl benzene sulphonic acid | 5.50 | 0.00 | 14.50 | 15.50 | 10.70 | 0.00 |
| 1,2 Propandiol | 6.00 | 3.50 | 8.70 | 8.70 | 1.10 | 7.80 |
| Triethanolamine | | | | | | |
| Monoethanolamine | | | 4.00 | 4.30 | 0.30 | |
| NaOH | 2.20 | 1.10 | | | | 1.00 |
| Glycerol | | 0.80 | 3.00 | 2.80 | | |
| Ethanol | 2.00 | | | | 0.38 | 0.39 |
| Na citrate | 3.00 | 2.80 | 3.40 | 2.10 | 7.40 | 5.40 |
| Polymer(s) as described above (total) | 0-5 | 0-5 | 0-5 | 0-5 | 0-5 | 0-5 |
| Protease | 0-1 | 0-1 | 0-1 | 0-1 | 0-1 | 0-1 |
| Amylase | 0 - 0.5 | 0 - 0.5 | 0 - 0.5 | 0 - 0.5 | 0 - 0.5 | 0 - 0.5 |
| Cellulase | 0 - 0.3 | 0 - 0.3 | 0 - 0.3 | 0 - 0.3 | 0 - 0.3 | 0 - 0.3 |
| Lipase | 0 - 0.2 | 0 - 0.2 | 0 - 0.2 | 0 - 0.2 | 0 - 0.2 | 0 - 0.2 |
| Mannanase | 0 - 0.2 | 0 - 0.2 | 0 - 0.2 | 0 - 0.2 | 0 - 0.2 | 0 - 0.2 |
| Pectat Lyase | 0 - 0.3 | 0 - 0.3 | 0 - 0.3 | 0 - 0.3 | 0 - 0.3 | 0 - 0.3 |
| water | **to 100** | **to 100** | **to 100** | **to 100** | **to 100** | **to 100** |

**Table 2 - continued: Liquid frame formulations according to the invention:**

| **active** | | | | | | | | |
|---|---|---|---|---|---|---|---|---|
| **(numbers: % active)** | **F7** | **F8** | **F9** | **F10** | **F11** | **F12** | **F13** | **F14** |
| alcohol ethoxylate 7EO | 3.80 | 0.30 | 13.30 | 8.00 | 5.70 | 20.00 | 9.20 | 29.00 |
| Coco fatty acid K12-18 | 2.80 | 3.00 | 1.70 | 1.80 | 2.50 | 5.00 | 8.60 | 10.40 |
| Fatty alcohol ether sulphate | 2.80 | 4.50 | 3.90 | 4.10 | | 10.00 | 22.20 | |
| Linear alkyl benzene sulphonic acid | 6.30 | 5.43 | 11.45 | 5.90 | 10.10 | 10.00 | 28.00 | 27.00 |
| 1,2 Propandiol | 0.50 | | 2.50 | 0.40 | 6.00 | 10.00 | 7.00 | 7.00 |
| Triethanolamine | | | | 8.10 | | | | |
| Monoethanolamine | 0.40 | 1.80 | | | | | 8.00 | 7.00 |
| NaOH | | | 2.20 | | 3.30 | 1.50 | | |
| Glycerol | | 0.60 | 0.20 | 1.90 | | | 7.00 | 10.00 |
| Ethanol | | | 1.84 | | | | | |
| Na citrate | 4.60 | 3.30 | 3.30 | 1.40 | | 1.50 | | |
| Polymer(s) as described above (total) | 0-5 | 0-5 | 0-5 | 0-5 | 0-5 | 0-5 | 0-5 | 0-5 |
| Protease | 0-1 | 0-1 | 0-1 | 0-1 | 0-1 | 0-3 | 0-3 | 0-3 |
| Amylase | 0 - 0.5 | 0 - 0.5 | 0 - 0.5 | 0 - 0.5 | 0 - 0.5 | 0 - 0.5 | 0 - 0.5 | 0 - 0.5 |
| Cellulase | 0 - 0.3 | 0 - 0.3 | 0 - 0.3 | 0 - 0.3 | 0 - 0.3 | 0 - 0.3 | 0 - 0.3 | 0 - 0.3 |
| Lipase | 0 - 0.2 | 0 - 0.2 | 0 - 0.2 | 0 - 0.2 | 0 - 0.2 | 0 - 0.2 | 0 - 0.2 | 0 - 0.2 |
| Mannanase | 0 - 0.2 | 0 - 0.2 | 0 - 0.2 | 0 - 0.2 | 0 - 0.2 | 0 - 0.2 | 0 - 0.2 | 0 - 0.2 |
| Pectat Lyase | 0 - 0.3 | 0 - 0.3 | 0 - 0.3 | 0 - 0.3 | 0-0.3 | 0 - 0.3 | 0 - 0.3 | 0 - 0.3 |
| water | **to 100** | **to 100** | **to 100** | **to 100** | **to 100** | **to 100** | **to 100** | **to 100** |

**Table 3: Powder frame formulations according to the invention:**

| | Bleach free Powder | | | | | |
|---|---|---|---|---|---|---|
| Alcohol ethoxylate 7EO | 0.6 | 0 | 1 | 0 | 0 | 5.2 |
| Coco fatty acid K12-18 | 1.2 | 0 | 0 | 0 | 0 | 0 |
| Fatty alcohol ether sulphate | 1.5 | 0 | 0 | 0 | 0 | 6 |
| Linear alkyl benzene sulphonic acid | 12.1 | 11.2 | 13.6 | 21.9 | 18.7 | 12.7 |
| Bleach activator | 0 | 0 | 0 | 0 | 0 | 0 |
| Percarbonate | 0 | 0 | 0 | 0 | 0 | 0 |
| Sodium acetate | 0 | 0 | 0 | 0.1 | 0 | 0.1 |
| Sodium Citrate | 0 | 0 | 0 | 0 | 0 | 14 |
| Na Silicate | 27.9 | 5.8 | 6.6 | 2 | 15 | 20.3 |
| Na Carbonate | 17.2 | 35 | 37.3 | 30.1 | 37 | 1 |
| Na Phosphate | 0 | 0 | 0 | 14 | 0.3 | 0 |
| NaHCO₃ | 0.7 | 0.9 | 0.5 | 2.7 | 0.4 | 10.5 |
| Zeolite4A | 4.2 | 0.1 | 5.1 | 10.2 | 1.8 | 11.6 |
| HEDP | 0 | 0 | 0 | 0 | 0 | 0.13 |
| MGDA | 0 | 1.1 | 0 | 0 | 0 | 0 |
| Cellulase | 0 - 0.5 | 0 - 0.5 | 0 - 0.5 | 0 - 0.5 | 0 - 0.5 | 0 - 0.5 |
| Lipase | 0 - 0.4 | 0 - 0.4 | 0 - 0.4 | 0 - 0.4 | 0 - 0.4 | 0 - 0.4 |
| Mannanase | 0 - 0.4 | 0 - 0.4 | 0 - 0.4 | 0 - 0.4 | 0 - 0.4 | 0 - 0.4 |
| Protease | 0-1.5 | 0 - 1.5 | 0 - 1.5 | 0 - 1.5 | 0-1.5 | 0-1.5 |
| Amylase | 0 - 0.5 | 0 - 0.5 | 0 - 0.5 | 0 - 0.5 | 0 - 0.5 | 0 - 0.5 |
| Na Sulfate | 30.8 | 1.3 | 33 | 11 | 22 | 3 |
| Na Chloride | 0.2 | 43 | 0.1 | 0 | 0.1 | 0.1 |
| optical brightener | 0.02 | 0 | | 0.1 | 0.06 | |
| Polymer(s) as described above (total) | 1 | 0 | 0.2 | 2 | 0.5 | 3 |

**Table 3 - continued: Powder frame formulations according to the invention:**

| | Bleach containing Powder | | | | | |
|---|---|---|---|---|---|---|
| Alcohol ethoxylate 7EO | 1.2 | 5 | 4 | 0.5 | 0.5 | 0 |
| Coco fatty acid K12-18 | 0 | 0 | 0 | 0.3 | 0 | 0.6 |
| Fatty alcohol ether sulphate | 0 | 3.9 | 4.4 | 1.6 | 0 | 0 |
| Linear alkyl benzene sulphonic acid | 7.6 | 12.1 | 11.5 | 12.2 | 6.5 | 10.4 |
| Bleach activator | 0.2 | 9.5 | 9.5 | 0.5 | 0.8 | 2.2 |
| Percarbonate | 3.6 | 19.4 | 16.6 | 2.2 | 11.5 | 5.8 |
| AcetateNa | 0 | 6.7 | 7.1 | 0.3 | 1 | 0.7 |
| CitrateNa | 0 | 1.6 | 8.2 | 0.3 | 0.9 | 1.7 |
| Na Silicate | 3.6 | 11.3 | 16.4 | 10.2 | 9.1 | 16.5 |
| Na Carbonate | 21.6 | 8.7 | 1.4 | 8 | 22.9 | 14.8 |
| Na Phosphate | 0 | 0 | 0 | 0 | 0 | 0 |
| NaHCO₃ | 0.2 | 2.8 | 1.6 | 0.8 | 0.5 | 0.5 |
| Zeolite4A | 1.6 | 1.4 | 2.4 | 1.6 | 1.8 | 2.3 |
| HEDP | 0 | 0.27 | 0.16 | 0 | 0 | 0.17 |
| MGDA | 0 | 0 | 0 | 0 | 0 | 0 |
| Cellulase | 0 - 0.5 | 0 - 0.5 | 0 - 0.5 | 0 - 0.5 | 0 - 0.5 | 0 - 0.5 |
| Lipase | 0 - 0.4 | 0 - 0.4 | 0 - 0.4 | 0-0.4 | 0 - 0.4 | 0 - 0.4 |
| Mannanase | 0 - 0.4 | 0 - 0.4 | 0 - 0.4 | 0-0.4 | 0 - 0.4 | 0 - 0.4 |
| Protease | 0-1.5 | 0 - 1.5 | 0 - 1.5 | 0-1.5 | 0-1.5 | 0-1.5 |
| Amylase | 0 - 0.5 | 0 - 0.5 | 0 - 0.5 | 0 - 0.5 | 0 - 0.5 | 0 - 0.5 |
| Na Sulfate | 51 | 4 | 6 | 57 | 38 | 37 |
| Na Chloride | 1 | 1 | 0.5 | 1.2 | 0.2 | 1 |
| optical brightener | | 0.29 | 0.1 | 0.23 | 0.13 | 0.19 |
| Polymer(s) as described above (total) | 2.2 | 9.2 | 2.2 | 0.7 | | 0.4 |

Further application areas for which the polymers as described above are suitable include the following:
Cosmetics, Personal Care
   Such compositions and formulations include shampoos, lotions, gels, sprays, soap, make-up powder, lipsticks, hairspray.
Lacquer and Colorants formulations
   Such compositions and formulations include non-water- and - preferably - water-based lacquer and colourants, paints, finishings.
Technical applications
   Such compositions and formulations include glues of any kind, non-water and - preferably - water-based liquid formulations or solid formulations.
Agricultural Formulations
   Such compositions and formulations include formulations and compositions containing actives within a liquid or solid environment.

The following examples shall further illustrate the present invention without restricting the scope of the present invention.

### EXAMPLES

### Synthesis

### Example 1: (Hyper)branched polymer, polymer P1:

Step A.1: A four-neck-round-bottom flask was charged with trimethylolpropane ethoxylate triacrylate, (average molecular weight Mₙ 692 g/mol; CAS 28961-43-5; 32.5g, 0.04697mol) int a mixture of water (36.65g) and methanol (36.65g) . N,N'-Bis-(3-aminopropyl)-ethylenediamine (CAS 10563-26-5; 16.37g, 0.09393mol) was added slowly to the reaction mixture, stirred at about 100°C for 17 h, and afterwards cooled down. In ¹H-NMR no acrylate peak signal could be detected and thus the acrylate was reacted as far as detectable by this method.

Step B.1: Then, poly(ethylene glycol) methyl ether methacrylate (average Mₙ 950 g/mol; CAS 26915-72-0; 22.31, 0.02348mol) was added to the reaction mixture and allowed to react for 17 hours at about 100°C. The polymer P1 was obtained. K- value (water): 16.6, GPC with 0.05 Wt.% ammonium acetate in HFIP (hexafluoroisopropanol): Mₙ = 6440 g/mol, M_{w} = 26700 g/mol, PDI (M_{w}/Mₙ) = 4.1.

### Example 2: Linear Polymer, polymer P2:

Step A.2: A four-neck-round-bottom flask was charged with poly(ethylene glycol) diacrylate (average molecular wight Mₙ 575 g/mol, CAS 26570-48-9; 18.5g, 0.03217 mol) was brought in a mixture of water (20.8 g) and methanol (20.8 g) . N,N'-Bis-(3-aminopropyl)-ethylenediamine (CAS 10563-26-5 ; 8.4g, 0.04826mol) was added slowly to the reaction mixture, stirred at 100°C for 17 h, and then cooled down. In ¹H-NMR no acrylate peak signal could be detected, and thus the acrylate was reacted as far as detectable by this method.

Step B.2: Then poly(ethylene glycol) methyl ether methacrylate, average molecular weight Mₙ 950 g/mol, CAS 26915-72-0; 15.28g, 0.01609 mol) was added to the reaction mixture and allowed to react for 17 hours under reflux. The polymer P2 was obtained. K- value (water): 17.0, GPC with 0.05 Wt.% ammonium acetate in HFIP: Mₙ = 9210 g/mol, M_{w} = 30200 g/mol, PDI (M_{w}/Mₙ) = 3.3.

The general composition and the anayltical data (and thus also stability) of the resulting polymers are shown in Table 5.

Following the above same synthesis procedures (as outlined in Example 1 and Example 2) and using the amounts shown in the Table 4, similar polymers were synthesized (Table 4). These polymers also behaved in the similar way for laundry washing test, biodegradability test and hydrolysis stability test respectively as shown below for Examples 1 and 2.

**Table 4: Further polymers as described above**

| # | Monomer a) | (wt.%) | Monomer b) | (wt.%) | Monomer c) | (wt.%) |
|---|---|---|---|---|---|---|
| P3 | trimethylolpropane triacrylate | 11 | N,N-Bis-[3-(methylamino)-propyl] methylamine | 18 | Poly(ethylene glycol) methyl ether acrylate (Mₙ 480 g) | 70 |
| P4 | Ethoxylated trimethylolpropan triacrylate | 37 | N4-amine | 16 | Stearyl polyethyleneglycol methacrylate 1100 | 47 |
| P5 | Di(ethylene glycol) methyl ether methacrylate | 10 | N4-amine | 12 | stearyl polyethylene glycol methacrylate 1100 | 78 |
| P6 | PEG diacrylate (PEGDA, Mₙ 575 g) | 24 | N4-amine | 15 | stearyl polyethyleneglycol methacrylate 1100 | 61 |
| P7 | Pentaerythritoltetraa crylate | 22 | N4-amine | 40 | PEG methylether methacrylate (Mn 950) | 40 |
| P8 | Dipentaerythritol penta/hexa-acrylate | 22 | N4-amine | 32 | PEG methylether methacrylate (Mn 950) | 49 |
| P9 | Pentaerythritoltetraa crylate | 12 | N4-amine | 23 | Ethyleneacrylate | 68 |
| P10 | Pentaerythritoltetraa crylate | 9 | N4-amine | 21 | Hydroxyethylacrylat e | 71 |
| P11 | trimethylolpropan triacrylate | 13 | 3,3-Diamino-N-methyldipropylamin e | 20 | Poly(ethylene glycol) methyl ether acrylate (Mₙ 480 g) | 65 |

**Table 5: analytical data of P1 and P2**

| Name | K value (measured right after synthesis) | K value (measured 6 months later) |
|---|---|---|
| Polymer P1 | 16.6 | 16.6 |
| Polymer P2 | 17.0 | 17.5 |

Polymer P1: solids content 34 wt.%; final product solution pH is 9.6. The K-value showed no change over 6 months period. Polymer P2 showed a minimal change over time (a slight increase which deviation is within the error of measurement of the measurements).

### Application test

The washing performance for the selected polymers was determined as follows.

The L*, a* b* values of the single stains are measured before wash with a MACH 5 from CFT/Colour consult. Then the fabrics are washed together with cotton ballast fabric and 20 steel balls at 30 °C in detergent formulation with the selected polymers. After the wash the fabrics are rinsed, spin-dried and dried in the air.

The washing performance for the single stains is determined by measuring the L*, a* b* values with a MACH 5 from CFT/Colour consult after drying. The dE value is calculated from the single values before and after wash. The higher the value, the better the performance.

**Table 6: Washing conditions (for clay removal):**

| Test equipment | Launder-o-meter, LP2 Typ, SDL Atlas Inc., USA |
|---|---|
| Washing liquor | 250 ml |
| Washing time/temperature | 20 min at 30 °C |
| Dosage | 2 g detergent/L |
| Fabric/liquor ratio | 1 : 12,5 |
| Washing cycles | 1 |
| Water hardness | 2,5 mmol/I Ca²⁺ : Mg²⁺ : HCO₃⁻ 4:1:8 |
| Ballast fabric | 2,5 g cotton fabric 283 |
| Sum ballast + soiled fabric | 20 g |
| Soiled fabric | CFT-P-H 145 ¹⁾ or CFT-KC-H 018²⁾ |

| | |
|---|---|
| ¹⁾ CFT-P-H 145, polyester fabric soiled with tennis court clay ²⁾ CFT-KC-H 018, cotton fabric soiled with ground soil ¹⁾²⁾Producer: Center for Testmaterials BV, NL-3130 AC Vlaardingen | |

**Table 7: Washing results for 4 g detergent/L (* or 2 g/L), Polymer dosage: 3 % delta delta E (detergent with polymer - detergent)**

| polymers | **P-H145** | **KC-H018** |
|---|---|---|
| Polyethyleneimine ethoxylated | 4.5 | 3.1; 4.3* |
| "Polymer P1" (of Example 1) | 0.8 | .3,4* |
| "Polymer P2" (of Example 2) | 1.5 | 2.7* |

### Testing on biodegradation

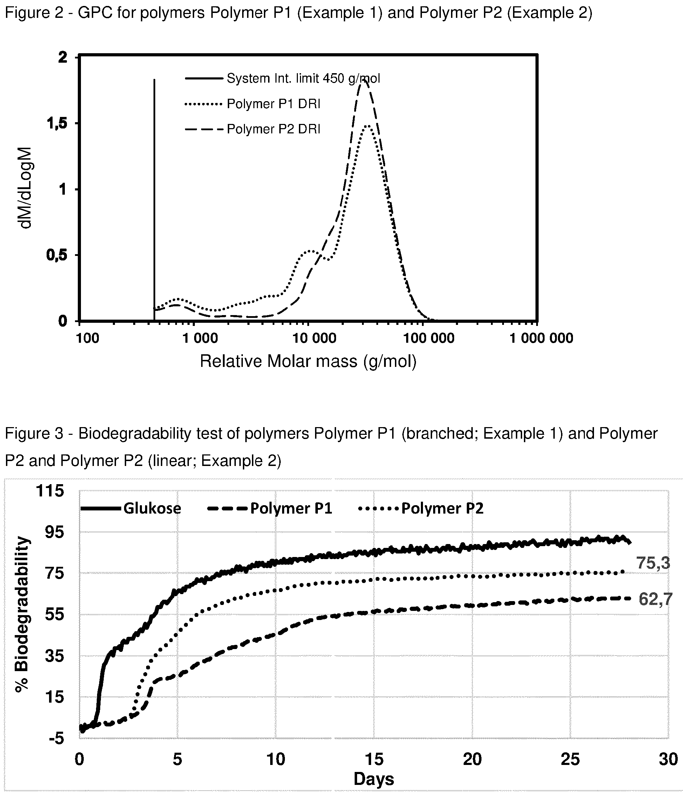

Biodegradability was analyzed for the polymers P1 and P2 in wastewater. Results shows Polymer P1 is bio-degradable to 63% and Polymer P2 are bio-degradable ~72% after 28 days using the OECD 301F test method (see also Figure 3).

Samples were tested in triplicate and compared to glucose as a positive control (more than 60%).

### Hydrolysis stability

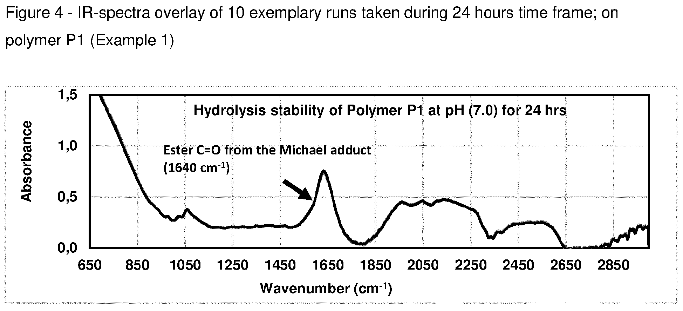

The hydrolysis stability was analyzed via React-IR, at 5% polymer solution in water, with pH adjusted to about 7 with citric acid and monitored with FTIR for 24 hrs. As can be seen in Figure 4, the IR-spectra show no indication of ester hydrolysis.

Description of Figures:
Figure 1 - General Reaction pathway
Figure 2 - GPC for polymers polymer P1 and polymer P2
   (The calibration was carried out with PMMA standards from PSS with molecular weights from M = 800 to M = 2,200,000. The values outside this elution range were extrapolated.)
Figure 3 - Biodegradability test of polymers polymer P1 and polymer P2
Figure 4 - IR-spectra overlay of 10 exemplary runs taken during 24 hours time frame; on polymer P1 (Example 1)

## Claims

1. A cleaning formulation or composition comprising a polymer comprising the components
a) 5 - 40 wt.% of at least one amine having at least 2 amino-groups,
b) 10 - 65 wt.% of at least one acrylate, such acrylate being selected from glycerol propoxylate tri(meth)acrylate, di(trimethylolpropane) tetra(meth)acrylate, trimethylolpropane propoxylate tri(meth)acrylate, trimethylolpropane ethoxylate tri(meth)acrylate, pentaerythritol tetra(meth)acrylate, di-pentaerythritol penta- or hexa-(meth)acrylate, trimethylolpropane tri(meth)acrylate, trimethylolpropane ethoxylate tri(meth)acrylate, and polyethylene glycol di(meth)acrylate,
c) 10- 75 wt.% of at least one mono-acrylate,
wherein the sum of the components a), b) and c) is 100 wt.%.

2. The cleaning formulation or composition according to claim 1 wherein acrylate b) is polyethylene glycol diacrylate.

3. The cleaning formulation or composition according to claim 1 or 2 wherein the amount of component a) is 10 to 35 wt.%.

4. The cleaning formulation or composition according to any of the preceding claims wherein the acrylate of component b) is selected from acrylates that bear least three C-C-double bonds.

5. The cleaning formulation or composition according to claim 4, wherein component b) is selected from acrylates with two C-C double bonds and acrylates with at least three C-C-double bonds per molecule and wherein the amount of acrylates with at least three C-C-double bonds per molecule are at most 50 mole % of the total amount of component b).

6. The cleaning formulation or composition according to any of claims 1 to 5, wherein the amount of component a) is from 20 to 30 wt.%, the amount of component b) is from 25 to 53wt% and the amount of component c) is from 23 to 50wt.%.

7. Use of a polymer of the cleaning formulation or composition according to any of the claims 1 to 6 in formulations or compositions within the field of application of fabric and home care, industrial and institutional cleaning, cosmetics, personal care, technical formulations such as paints and colours, formulations in the field of construction such as cement and cement-containing formulations and the like containing inorganic materials in the need of dispersing and or stabilizing them, and agricultural formulations, in each application as dispersant and/or soil release agent to release soil and other dirt from surfaces and/or disperse soil, dirt, organic and/or inorganic solid particles in a liquid or solid environment.

8. Use of a polymer of the cleaning formulation or composition according to any of the claims 1 to 6 in the field of application of fabric care as dispersant to remove or release solids or water-insoluble substances from surfaces and/or to disperse such substances within liquids and/or solids.

## Patentansprüche

1. Eine Reinigungsformulierung oder -zusammensetzung, die aus einem Polymer besteht, das die Komponenten umfasst
a) 5 - 40 Wt.% von mindestens einem Amine mit mindestens 2 Aminogruppen,
b) 10 - 65 Wt.% von mindestens einem Acrylat, wobei dieses Acrylat aus Glycerolpropoxylattri(meth)acrylat, Di(trimethylolpropan)tetra(meth)acrylat, Trimethylolpropanpropoxylattri(meth)acrylat, Trimethylolpropanethoxylattri(meth)acrylat, Pentaerythritoltetra(meth)acrylat, di-pentaerythritol penta- oder hexa-(meth)acrylat, trimethylolpropantri(meth)acrylat, trimethylolpropanethoxylattri(meth)acrylat und polyethylenglykoldi(meth)acrylat ausgewählt werden,
c) 10-75 Gewichtsprozent von mindestens einem Monoacrylat,
wobei die Summe der Komponenten a), b) und c) ist 100 Gewichtsprozent.

2. Die Reinigungsformulierung oder -zusammensetzung gemäß Anspruch 1, bei dem Acrylat b) Polyethylenglykoldiacrylat ist.

3. Die Reinigungsformulierung oder -zusammensetzung gemäß Anspruch 1 oder 2, wobei die Menge der Komponente a) 10 bis 35 Gewicht beträgt. %.

4. Die Reinigungsformulierung oder -zusammensetzung gemäß einer der vorherigen Ansprüche, bei denen das Acrylat der Komponente b) aus Acrylaten ausgewählt wird, die mindestens drei C-C-Doppelbindungen tragen.

5. Die Reinigungsformulierung oder -zusammensetzung gemäß Anspruch 4, wobei die Komponente b) aus Acrylaten mit zwei C-C-Doppelbindungen und Acrylaten mit mindestens drei C-C-Doppelbindungen pro Molekül ausgewählt wird und wobei die Menge an Acrylaten mit mindestens drei C-C-Doppelbindungen pro Molekül höchstens 50 Mol % der Gesamtmenge der Komponente b ausmacht.

6. Die Reinigungsformulierung oder -zusammensetzung gemäß einem der Ansprüche 1 bis 5, wobei die Menge der Komponente a) zwischen 20 und 30 Wt.%, die Menge der Komponente b) zwischen 25 und 53 Wt% und die Menge der Komponente c) zwischen 23 und 50 Wt.% liegt.

7. Verwendung eines Polymers der Reinigungsformulierung oder -zusammensetzung gemäß einem der Ansprüche 1 bis 6 in Formulierungen oder Zusammensetzungen im Anwendungsbereich der Textil- und Haushaltspflege, industrieller und institutioneller Reinigung, Kosmetik, Körperpflege, technischer Formulierungen wie Farben und Farben, Formulierungen im Baubereich wie Zement und zementhaltiger Formulierungen und Ähnliches, die anorganische Materialien enthalten, die dispersiert und/oder stabilisiert werden müssen, und landwirtschaftliche Formulierungen, in jeder Anwendung als Dispergiermittel zur Entfernung oder Freisetzung von Oberflächen und/oder zur Dispersion von Substanzen in Flüssigkeiten und/oder Feststoffen.

8. Verwendung eines Polymers der Reinigungsformulierung oder -zusammensetzung gemäß einer der Ansprüche 1 bis 6 im Bereich der Textilpflege als Dispergiermittel, um Feststoffe oder wasserunlösliche Substanzen von Oberflächen zu entfernen oder freizusetzen und/oder diese Substanzen in Flüssigkeiten und/oder Feststoffe zu dispergieren.

## Revendications

1. Une formulation ou composition de nettoyage composée d'un polymère composé des composants
a) 5 - 40 % en poids d'au moins une amine ayant au moins 2 groupes aminés,
b) 10 à 65 % en poids d'au moins un acrylate, cet acrylate étant sélectionné parmi le propoxylate de glycérol tri(méth)acrylate, le di(triméthylolpropane) tétra(méth)acrylate, le tri(méthamp)acrylate, le tri(méth)acrylate de triméthylolpropane, le tri(méth)acrylate, le pentaérythritol tétra(méth)acrylate, le di-pentaérythritol penta- ou hexa-(méth)acrylate, le tri(méth)acrylate, le tri(méthéthylopropane) éthoxylate, le tri(méth)acrylate et le polyéthylène glycol di(méth)acrylate,
c) 10 à 75 % en poids d'au moins un monoacrylate,
où la somme des composantes a), b) et c) est de 100 % en poids.

2. La formulation ou composition de nettoyage selon la revendication 1 dans laquelle l'acrylate b) est le polyéthylène glycol diacrylate.

3. La formulation ou composition de nettoyage selon la revendication 1 ou 2 où la quantité de composant a) est de 10 à 35 en poids.

4. La formulation ou composition de nettoyage selon l'une des affirmations précédentes où l'acrylate du composant b) est sélectionné parmi des acrylates portant au moins trois doubles liaisons C-C.

5. La formulation ou composition de nettoyage selon la revendication 4, dans laquelle le composant b) est sélectionné parmi des acrylates à double liaison C-C et des acrylates à au moins trois doubles liaisons C-C par molécule, et où la quantité d'acrylates avec au moins trois doubles liaisons C-C par molécule représente au maximum 50 % de la quantité totale du composant b.

6. La formulation ou composition de nettoyage selon l'une des revendications 1 à 5, où la quantité de composant a) est de 20 à 30 en poids, la quantité de composant b) est de 25 à 53 % en poids et la quantité de composant c) entre 23 et 50 % en poids.

7. Utilisation d'un polymère de la formulation ou de la composition de nettoyage selon l'une des revendications 1 à 6 dans formulations ou compositions dans le domaine d'application des tissus et des soins domestiques, du nettoyage industriel et institutionnel, des cosmétiques, des soins personnels, des formulations techniques telles que les peintures et colorants, des formulations dans le domaine de la construction telles que les formulations contenant du ciment et des formulations contenant du ciment et autres matières similaires contenant des matériaux inorganiques nécessitant leur dispersion et/ou leur stabilisation, et des formulations agricoles, à chaque application sous forme de dispersant pour retirer ou libérer des surfaces et/ou disperser des substances dans des liquides et/ou des solides.

8. Utilisation d'un polymère de la formulation ou composition de nettoyage selon l'une ou l'autre des revendications 1 à 6 dans le domaine de l'application des soins textiles comme dispersant pour éliminer ou libérer des solides ou des substances insolubles dans l'eau des surfaces et/ou pour disperser ces substances dans des liquides et/ou des solides.
